# EUROPEAN PATENT APPLICATION

(11) **EP 4 836 333 A1**
(43) Date of publication of application: **04.11.2026**
(21) Application number: 24914776.0
(22) Date of filing: 17.07.2024
(51) Int. Cl.: H04L 1/1812

(54) **DATA TRANSMISSION METHOD AND APPARATUS, AND STORAGE MEDIUM AND ELECTRONIC APPARATUS**

(30) Priority: 02.01.2024 CN 202410011761
(71) Applicant: ZTE CORPORATION, Shenzhen, Guangdong 518057 (CN)
(72) Inventor: XUE, Yan, Shenzhen, Guangdong 518057 (CN); XIE, Feng, Shenzhen, Guangdong 518057 (CN)
(74) Representative: Deambrogi, Edgardo
(86) International application number: PCT/CN2024/106033
(87) International publication number: WO 2025/145554

(57) **Abstract**

Provided in the embodiments of the present disclosure are a data transmission method and apparatus, and a storage medium and an electronic apparatus. The method comprises: by using data radio bearer (DRB) and hybrid automatic repeat request (HARQ)-entity mapping information, a first network element configuring the mapping between at least one group of DRB and HARQ entities, wherein the DRB and HARQ-entity mapping information indicates the mapping relationship between the at least one group of DRB and HARQ entities, and each group among the at least one group of DRB and HARQ entities comprises at least one DRB and at least one HARQ entity, and on the basis of the mapping relationship between the at least one group of DRB and HARQ entities, which mapping relationship is indicated by the DRB and HARQ-entity mapping information, the first network element submitting data, which is received by the HARQ entity included in each group, to an upper layer by means of the DRB to which the HARQ entity is mapped.

## Description

### Cross-Reference to Related Application

The present disclosure claims priority to Chinese Patent Application No. CN202410011761.0, filed on January 2, 2024, entitled "Data Transmission Method and Apparatus, and Storage Medium and Electronic Apparatus", the entire contents of which are incorporated herein by reference.

### Technical Field

Embodiments of the present disclosure relate to the field of communications, and in particular, relate to a data transmission method and apparatus, and a storage medium and an electronic apparatus.

### Background

With increasingly diversified wireless communication services, demands for differentiated service performance guarantees are continuously rising.

Data transmission methods in related technologies fail to sufficiently take service performance differentiation into consideration. Although data flows with different Quality of Service (QoS) requirements are mapped to different Data Radio Bearers (DRBs) at the Service Data Adaptation Protocol (SDAP) layer to distinguish these data flows, data of different DRBs will be multiplexed at the Medium Access Control (MAC) layer and then transmitted via Hybrid Automatic Repeat reQuest (HARQ) over the physical layer. Such inflexible data transmission mapping scheme fails to support differentiated transmission of various data at the physical layer.

### Summary

The embodiments of the present disclosure provide a data transmission method and apparatus, and a storage medium and an electronic apparatus, which may at least solve the problem that differentiated transmission of various data at the physical layer cannot be supported.

According to some embodiments of the present disclosure, a data transmission method is provided, including: configuring, by a first network element, mapping between Data Radio Bearer (DRB) and Hybrid Automatic Repeat reQuest (HARQ) entity within each group of at least one group based on DRB-HARQ entity mapping information, wherein the DRB-HARQ entity mapping information indicates mapping relationship between DRB and HARQ entity within each group, and each group includes at least one DRB and at least one HARQ entity; and delivering, by the first network element according to the mapping relationship indicated by the DRB-HARQ entity mapping information, data received by an HARQ entity included in each group to an upper layer via a DRB mapped to the HARQ entity in the corresponding group.

According to another embodiment of the present disclosure, a data transmission method is further provided, including: configuring, by a second network element, mapping between Data Radio Bearer (DRB) and Hybrid Automatic Repeat reQuest (HARQ) entity within each group of at least one group based on DRB-HARQ entity mapping information, wherein the DRB-HARQ entity mapping information indicates mapping relationship between DRB and HARQ entity within each group, and each group includes at least one DRB and at least one HARQ entity; and delivering, by the second network element according to the mapping relationship indicated by the DRB-HARQ entity mapping information, a data flow to be sent via a DRB in one of the at least one group to a HARQ entity mapped to the DRB in the corresponding group, so as to send the data flow via the HARQ entity.

According to another embodiment of the present disclosure, a data transmission method is further provided, including: configuring, by a third network element, mapping between Data Radio Bearer (DRB) and Hybrid Automatic Repeat reQuest (HARQ) entity within each group of at least one group based on DRB-HARQ entity mapping information, wherein the DRB-HARQ entity mapping information indicates mapping relationship between DRB and HARQ entity within each group, and each group includes at least one DRB and at least one HARQ entity; and sending, by the third network element, the DRB-HARQ entity mapping information.

According to another embodiment of the present disclosure, a data transmission apparatus applied to a first network element is provided, including:
a first configuring module, configured to configure mapping between Data Radio Bearer (DRB) and Hybrid Automatic Repeat reQuest (HARQ) entity within each group of at least one group based on DRB-HARQ entity mapping information, wherein the DRB-HARQ entity mapping information indicates mapping relationship between DRB and HARQ entity within each group, and each group includes at least one DRB and at least one HARQ entity; and
a first delivering module, configured to deliver, according to the mapping relationship indicated by the DRB-HARQ entity mapping information, data received by an HARQ entity included in each group to an upper layer via a DRB mapped to the HARQ entity in the corresponding group.

According to another embodiment of the present disclosure, a data transmission apparatus applied to a second network element is provided, including:
a second configuring module, configured to configure mapping between Data Radio Bearer (DRB) and Hybrid Automatic Repeat reQuest (HARQ) entity within each group of at least one group based on DRB-HARQ entity mapping information, wherein the DRB-HARQ entity mapping information indicates mapping relationship between DRB and HARQ entity within each group, and each group includes at least one DRB and at least one HARQ entity; and
a second delivering module, configured to deliver, according to the mapping relationship indicated by the DRB-HARQ entity mapping information, a data flow to be sent via a DRB in one of the at least one group to a HARQ entity mapped to the DRB in the corresponding group, so as to send the data flow via the HARQ entity.

According to another embodiment of the present disclosure, a data transmission apparatus applied to a third network element is provided, including:
a third configuring module, configured to configure mapping between Data Radio Bearer (DRB) and Hybrid Automatic Repeat reQuest (HARQ) entity within each group of at least one group based on DRB-HARQ entity mapping information, wherein the DRB-HARQ entity mapping information indicates mapping relationship between DRB and HARQ entity within each group, and each group includes at least one DRB and at least one HARQ entity; and
a third sending module, configured to send the DRB-HARQ entity mapping information.

According to yet another embodiment of the present disclosure, a computer-readable storage medium is further provided, wherein a computer program is stored in the computer-readable storage medium, and the computer program, when executed by a processor, implements the steps of the method according to any one of the above method embodiments.

According to yet another embodiment of the present disclosure, an electronic apparatus is further provided, including a memory and a processor, wherein the memory stores a computer program, and the processor is configured to run the computer program to perform the steps of the method according to any one of the above method embodiments.

### Brief Description of the Drawings

FIG. 1 is a schematic diagram illustrating a transmission and processing flow of data flows at each layer in the related art;
FIG. 2 is a structural schematic diagram of a downlink with CA configured in the related art;
FIG. 3 is a structural schematic diagram of an uplink with CA configured in the related art;
FIG. 4 is a schematic diagram of a data mapping mode in the related art;
FIG. 5 is a hardware structural block diagram of a mobile terminal for implementing a data transmission method according to some embodiments of the present disclosure;
FIG. 6 is a first flowchart of a data transmission method according to some embodiments of the present disclosure;
FIG. 7 is a schematic diagram showing mapping from one DRB to one HARQ entity in data mapping according to some embodiments of the present disclosure;
FIG. 8 is a schematic diagram of packetized data transmission under mapping from one DRB to one HARQ entity according to some embodiments of the present disclosure;
FIG. 9 is a schematic diagram showing mapping from a plurality of DRBs to one HARQ entity in data mapping according to some embodiments of the present disclosure;
FIG. 10 is a schematic diagram of packetized data transmission under mapping from a plurality of DRBs to one HARQ entity according to some embodiments of the present disclosure;
FIG. 11 is a schematic diagram showing mapping from one DRB to a plurality of HARQ entities in data mapping according to some embodiments of the present disclosure;
FIG. 12 is a schematic diagram of packetized data transmission under mapping from one DRB to a plurality of HARQ entities according to some embodiments of the present disclosure;
FIG. 13 is a schematic diagram illustrating DRB-HARQ entity mapping information of three groups according to some embodiments of the present disclosure;
FIG. 14 is a second flowchart of a data transmission method according to some embodiments of the present disclosure;
FIG. 15 is a third flowchart of a data transmission method according to some embodiments of the present disclosure;
FIG. 16 is a first schematic diagram of an RRC message transmission method according to some embodiments of the present disclosure;
FIG. 17 is a second schematic diagram of an RRC message transmission method according to some embodiments of the present disclosure;
FIG. 18 is a fourth flowchart of a data transmission method according to some embodiments of the present disclosure;
FIG. 19 is a fifth flowchart of a data transmission method according to some embodiments of the present disclosure;
FIG. 20 is a first structural block diagram of a data transmission apparatus according to some embodiments of the present disclosure;
FIG. 21 is a second structural block diagram of a data transmission apparatus according to some embodiments of the present disclosure; and
FIG. 22 is a third structural block diagram of a data transmission apparatus according to some embodiments of the present disclosure.

### Detailed Description of the Embodiments

The embodiments of the present disclosure will be described in detail below with reference to the accompanying drawings in conjunction with the embodiments.

It should be noted that the terms "first", "second" and the like in the specification, claims and the accompanying drawings of the present disclosure are used to distinguish similar objects, and are not necessarily used to describe a specific sequence or order.

First, the related art involved in the present disclosure will be described as follows:
With the evolution of wireless communication technologies, communication services have become increasingly diverse. The three classic major 5G scenarios exhibit distinctly differentiated service characteristics. An Enhanced Mobile Broadband (eMBB) service delivers high-speed data transmission with large data packets and high throughput. An Ultra-reliable and Low Latency Communications (URLLC) service imposes stringent requirements on low latency and high transmission reliability. A Massive Machine Type Communication (mMTC) service prioritizes small data packet transmission with low cost and low power consumption. In the future, multi-modal services integrating multiple service types such as immersive cloud Extended Reality (XR), multi-dimensional holography, autonomous driving and industrial Internet will emerge, raising higher requirements for differentiated service performance guarantees.

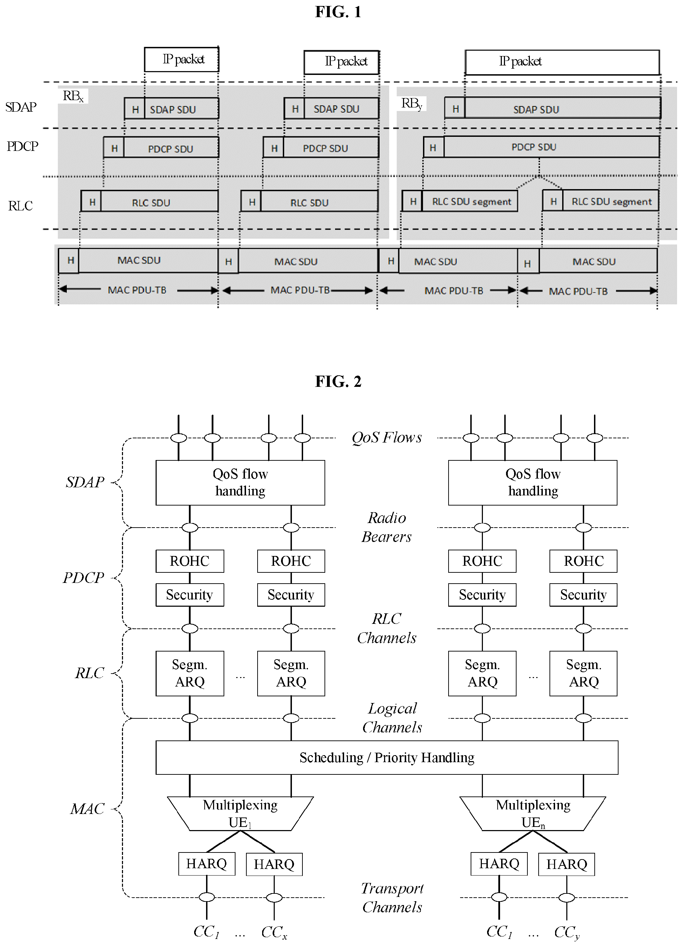

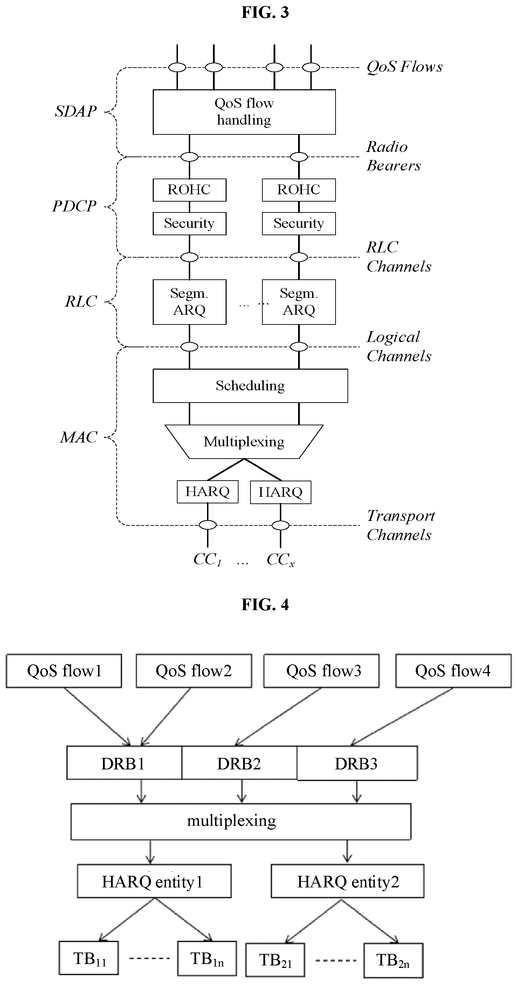

A Radio Bearer (RB) refers to a collective set of protocol entities and corresponding configurations allocated by a base station for a User Equipment (UE), and includes a series of resources belonging to each protocol entity. The 5G Radio Access Network (RAN) leverages a data mapping scheme based on Data Radio Bearers (DRBs) to provide service guarantees, and a DRB acts as the actual transport channel for user data. From the perspective of services provided by lower layers to upper layers: the physical layer provides services to the MAC sublayer via transport channels; the MAC sublayer provides services to the Radio Link Control (RLC) sublayer via logical channels; the RLC sublayer provides services to the Packet Data Convergence Protocol (PDCP) sublayer via RLC channels; the PDCP sublayer provides services to the SDAP sublayer via Radio Bearers (RBs); and the SDAP layer provides services to the upper layer via QoS flows. From the perspective of data mapping from upper layers to lower layers: the SDAP layer is responsible for mapping QoS flows to Data Radio Bearers (DRBs), and QoS flows with distinct packet forwarding requirements are mapped to different DRBs to guarantee service differentiation; the PDCP layer performs sorting, header compression, encryption and integrity protection on upper-layer data; the RLC layer segments data and executes slow retransmission via Automatic Repeat reQuest (ARQ), one complete RLC Service Data Unit (SDU) may be split into multiple RLC PDU segments, and the RLC layer may further re-segment data according to actual resource conditions; the MAC layer multiplexes multiple MAC SDUs into a single MAC PDU to serve as a Transport Block (TB) for physical layer transmission, and adopts the HARQ mechanism to realize fast retransmission of data packets. One HARQ entity manages multiple parallel HARQ processes, and data from different HARQ processes cannot be combined. A TB serves as the basic transmission unit for HARQ. When spatial multiplexing is not adopted, one HARQ process may transmit one TB. When spatial multiplexing is adopted, one HARQ process may transmit up to two TBs. FIG. 1 is a schematic diagram illustrating a transmission and processing flow of data flows at each layer in the related art. FIG. 2 is a structural schematic diagram of a downlink with Carrier Aggregation (CA) configured in the related art. FIG. 3 is a structural schematic diagram of an uplink with CA configured in the related art. As shown in FIG. 1, after multi-layer processing, data of RBx and RBy among Radio Bearers (RBs) are multiplexed into one MAC PDU at the MAC layer and finally mapped onto a single TB. During radio bearer data transmission from the PDCP and RLC layers to the MAC layer, a sub-header corresponding to each respective layer is appended to the radio bearer data at each layer. As shown in FIG. 2 and FIG. 3, radio bearer data is first mapped to RLC channels, then mapped from RLC channels to logical channels, and further scheduled, multiplexed, and mapped to HARQ entities via logical channels. The 5G RAN prioritizes service provision based on full utilization of radio resources in data transmission processing yet fails to sufficiently take service performance differentiation into consideration. Although data flows with different QoS requirements are mapped to different DRBs at the SDAP layer to distinguish these data flows, data of different DRBs will be multiplexed together at the MAC layer. After multiplexing at the MAC layer, service differentiation can no longer be identified at lower layers. Such inflexible data transmission mapping scheme fails to support differentiated transmission of various data at the physical layer, making it hard to flexibly guarantee differentiated performance for diverse services.

In a 5G New Radio (NR) wireless network, DRBs are deployed to carry user data transmission. A plurality of DRBs can be simultaneously established between a user equipment and a base station node, and each DRB performs the same standard forwarding processing on user data packets. One or a plurality of QoS flows are mapped to one DRB. Given limited radio resources in wireless communication networks, data from different DRBs is processed by the PDCP and RLC layers, multiplexed at the MAC layer, and transmitted as TBs over multiple HARQ processes via HARQ entities. FIG. 4 is a schematic diagram of a data mapping mode in the related art. As shown in FIG. 4, DRBs are mapped to HARQ entities after being multiplexed at the MAC-layer in 5G. Direct mapping between DRBs and HARQ entities is unavailable, resulting in ambiguous mapping relationships between DRBs and HARQ entities. Accordingly, the network cannot determine whether data transmitted on the same TB originates from a single service or multiple services.

To address the foregoing problems existing in the related art, corresponding solutions are proposed in the embodiments of the present disclosure, which will be described below in conjunction with the embodiments.

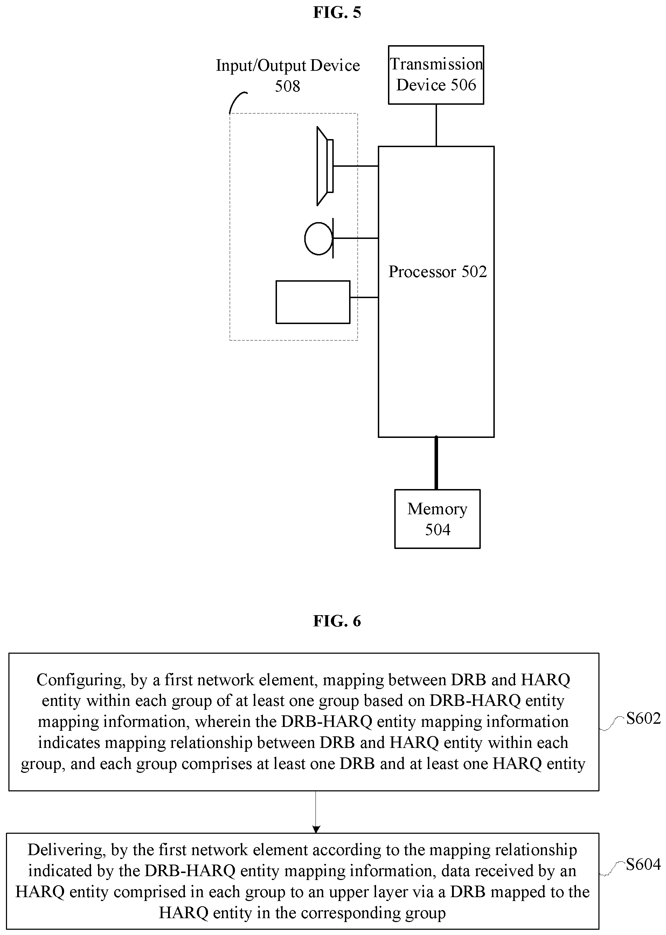

The method embodiments provided in the embodiments of the present disclosure may be executed on a mobile terminal, a computer terminal or similar computing devices. Taking execution on a mobile terminal as an example, FIG. 5 is a hardware structural block diagram of a mobile terminal for implementing a data transmission method according to some embodiments of the present disclosure. As shown in FIG. 5, the mobile terminal may include one or more processors 502 (only one is illustrated in FIG. 5; the processor 502 may include but is not limited to processing devices such as a Micro-Controller Unit (MCU) or a Field Programmable Gate Array (FPGA)) and a memory 504 configured to store data. The mobile terminal may further include a transmission device 506 configured to implement communication functions and an input/output device 508. Those having ordinary skill in the art will appreciate that the structure shown in FIG. 5 is merely illustrative and does not limit the structure of the mobile terminal. For example, the mobile terminal may include more or fewer components than those shown in FIG. 5, or adopt a configuration different from that shown in FIG. 5.

The memory 504 may be configured to store computer programs, such as software programs and modules of application software, e.g., the computer programs corresponding to the data transmission method in the embodiments of the present disclosure. The processor 502 executes various functional applications and data processing by running the computer programs stored in the memory 504, so as to implement the foregoing methods. The memory 504 may include a high-speed random access memory, and may further include a non-volatile memory such as one or more magnetic storage devices, flash memories, or other non-volatile solid-state memories. In some implementations, the memory 504 may further include a memory remotely disposed relative to the processor 502, which may be connected to the mobile terminal via a network. Examples of such networks include but are not limited to the Internet, an enterprise intranet, a local area network, a mobile communication network and combinations thereof.

The transmission device 506 is configured to receive or transmit data via a network. Specific examples of the foregoing network may include a wireless network provided by a communication service provider of the mobile terminal. In an implementation, the transmission device 506 includes a Network Interface Controller (NIC), which may connect to other network devices via a base station to communicate with the Internet. In an implementation, the transmission device 506 may be a Radio Frequency (RF) module configured to communicate with the Internet in a wireless manner.

In the embodiments of the present disclosure, a network element may include one network node or a plurality of network nodes, one network function or a plurality of network functions, one network layer or a plurality of network layers, one network device or a plurality of network devices, and/or one network entity or a plurality of network entities. For example, a network element may be a RAN node, the Radio Resource Control (RRC) layer of a RAN, the MAC layer of a RAN, a MAC entity of a RAN, a Central Unit (CU), a Distributed Unit (DU), a User Equipment (UE), or an Integrated Access and Backhaul (IAB) Node. As an exemplary implementation, the RAN node may include an access network device. In some embodiments, the access network device may include a 4G eNodeB, a 5G gNodeB, a next-generation new base station (such as a 6G base station), a wireless controller in a Cloud Radio Access Network (CRAN), a relay station, an access point, an in-vehicle device, a wearable device, or a network device in a future evolved Public Land Mobile Network (PLMN), or the like. In the embodiments of the present disclosure, a DRB includes at least one of: a communication-related radio bearer, a sensing-related radio bearer, an Artificial Intelligence (AI)-related radio bearer, a data service-related radio bearer, a computing-related radio bearer, or a security/trust-related radio bearer.

In this embodiment, a data transmission method is provided. FIG. 6 is a first flowchart of a data transmission method according to some embodiments of the present disclosure. As shown in FIG. 6, the flow includes the following steps S602 and S604.

In step S602, a first network element configures mapping between DRB and HARQ entity within each group of at least one group based on DRB-HARQ entity mapping information, wherein the DRB-HARQ entity mapping information indicates mapping relationship between DRB and HARQ entity within each group, and each group includes at least one DRB and at least one HARQ entity.

In step S604, the first network element delivers, according to the mapping relationship indicated by the DRB-HARQ entity mapping information, data received by an HARQ entity included in each group to an upper layer via a DRB mapped to the HARQ entity in the corresponding group.

In the foregoing steps, the first network element includes, but is not limited to, a RAN, a UE, a CU, a DU, a relay node, or an IAB node. The DRB-HARQ entity mapping information may contain mapping information of multiple groups of HARQ entities and DRBs. For example, the DRB-HARQ entity mapping information includes mapping information of the following three groups of DRBs and HARQ entities: Group 1 includes DRB 1 and HARQ entity 1, indicating that DRB 1 is mapped to HARQ entity 1; Group 2 includes DRB 2, DRB 3 and HARQ entity 2, indicating that DRB 2 and DRB 3 are mapped to HARQ entity 2; Group 3 includes DRB 4, HARQ entity 3 and HARQ entity 4, indicating that DRB 4 is mapped to HARQ entity 3 and HARQ entity 4. In accordance with the DRB-HARQ entity mapping information of multiple groups of HARQ entities and DRBs, the first network element delivers data received by an HARQ entity included in each group to an upper layer via a DRB mapped to the HARQ entity in the corresponding group. For instance, the first network element delivers data received on HARQ entity 1 to the upper layer via DRB 1; the first network element delivers data received on HARQ entity 2 to the upper layer via DRB 2 and DRB 3; and the first network element delivers data received on HARQ entity 3 and HARQ entity 4 to the upper layer via DRB 4.

Through the above steps, mappings between DRBs and HARQ entities are configured based on DRB-HARQ entity mapping information. As a result, data requiring differentiated transmission can be transmitted separately at the physical layer and independently delivered to the upper layer at the receiving side, thereby realizing differentiated service performance. The scheme effectively solves the problem that differentiated transmission of various data at the physical layer cannot be supported in related art, improves the flexibility of data transmission at the physical layer, flexibly meets the underlying transmission demands of different services, and greatly enhances service transmission capability and service performance experience.

In an exemplary embodiment, the mapping relationship between the DRB and the HARQ entity within each group includes at least one of: a mapping relationship between one DRB and one HARQ entity; a mapping relationship between one DRB and a plurality of HARQ entities; a mapping relationship between a plurality of DRBs and one HARQ entity.

In an exemplary embodiment, DRBs and HARQ entities have no fixed coupling relationship, and their association relationship is established only through DRB-HARQ entity mapping information. DRBs and HARQ entities are generated independently, and flexible mapping between the DRBs and the HARQ entities is implemented via a Radio Resource Control (RRC) message or a Downlink Control Information (DCI) message. When network transmission conditions or service demands change, the mapping relationship between DRBs and HARQ entities can be flexibly adjusted.

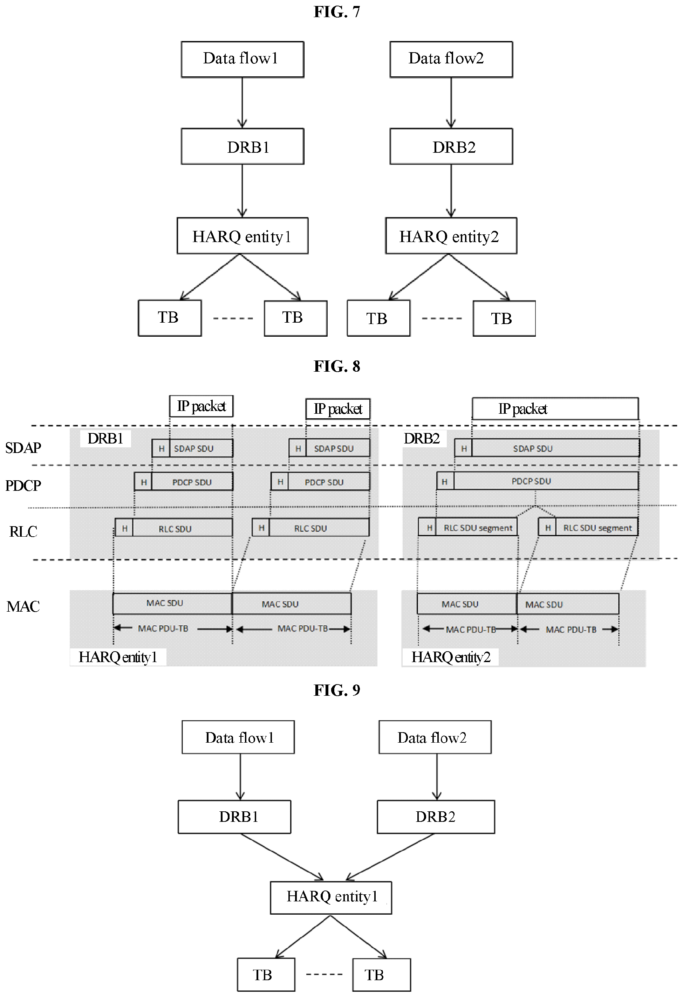

In an exemplary embodiment, the mapping relationship between one DRB and one HARQ entity represents one-to-one mapping between one DRB and one HARQ entity. FIG. 7 is a schematic diagram showing mapping from one DRB to one HARQ entity in data mapping according to some embodiments of the present disclosure. As shown in FIG. 7, data flow 1 has an in-order delivery requirement, while data flow 2 has no in-order delivery requirement. Under the one-to-one mapping between DRBs and HARQ entities, data flow 1 requiring in-order delivery is mapped to DRB 1, and data flow 2 without in-order delivery requirement is mapped to DRB 2. Since DRB 1 and DRB 2 are respectively mapped to HARQ entity 1 and HARQ entity 2 on a one-to-one basis, data flow 1 is transmitted on HARQ processes of HARQ entity 1, and data flow 2 is transmitted on HARQ processes of HARQ entity 2. Accordingly, different data flows will not be mapped to the same HARQ entity, let alone to the same Transport Block (TB) within the same HARQ process. Since direct mapping is supported between DRBs and HARQ entities, data of each DRB can be directly mapped to the TB on the HARQ process under the corresponding HARQ entity. As data of services with different demands can be distinguished during physical-layer transmission, different transmission optimization measures can be adopted at the physical layer. For example, for data flows requiring in-order delivery, the Modulation and Coding Scheme (MCS) level can be specially lowered during physical-layer scheduling, and transmit power can be increased during power control, so as to ensure that data can be transmitted correctly and delivered in order within a short time. FIG. 8 is a schematic diagram of packetized data transmission under mapping from one DRB to one HARQ entity according to some embodiments of the present disclosure. As shown in FIG. 8, when the SDAP, PDCP, RLC and MAC sublayers are deployed, DRBs can be directly mapped to MAC-layer data, such that a MAC sub-header may even be omitted at the MAC layer in some scenarios. The service characteristics include, but are not limited to: an indicator for service transmission requiring in-order data packet delivery, an indicator for service transmission not requiring in-order data packet delivery, an indicator for high-reliability transmission service, an indicator for low-reliability transmission service, an indicator for low-latency transmission service, an indicator for service transmission without low-latency requirements, a service type indicator, a service ID, a service name identifier.

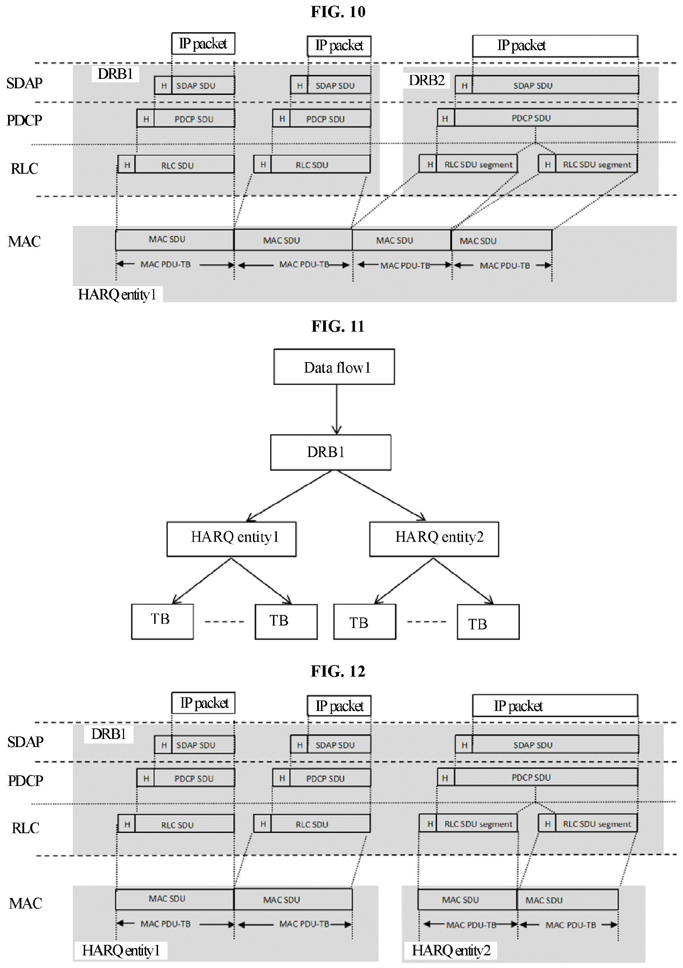

In an exemplary embodiment, the mapping relationship between a plurality of DRBs and one HARQ entity represents mapping of a plurality of DRBs to one HARQ entity. In multi-modal service scenarios, multiple parallel service transmissions exist between a base station and a UE, and these parallel services have correlation or restriction relationships. For example, in a holographic communication scenario, services such as video service, time-frequency service, haptic service and taste service need to cooperate and synchronize with one another. Each service corresponds to one DRB, and multiple services are transmitted via one HARQ entity, so that data of each service can be received timely at the receiving side and cooperate with one another to deliver high-quality integrated service experience. During data mapping, different DRBs are mapped to TBs on HARQ processes under the same HARQ entity, and different DRBs can be distinguished via different HARQ processes or different TBs under the same HARQ process. When spatial multiplexing is not adopted, one HARQ process corresponds to one TB. Mapping different DRBs to different HARQ processes of one HARQ entity ensures that data carried by one TB belongs to a single service, and different DRBs can be distinguished via HARQ process IDs. When spatial multiplexing is adopted, one HARQ process can transmit up to two TBs via spatial multiplexing. When spatial multiplexing is adopted, in one case, different DRBs are mapped to different HARQ processes, such that the two TBs multiplexed in one HARQ process carry data of the same DRB, and different DRBs can be distinguished merely via HARQ process IDs. When spatial multiplexing is adopted, in another case, different DRBs are mapped to different TBs under one HARQ process, such that the two TBs multiplexed in one HARQ process carry data of different DRBs, and different DRBs can be distinguished via HARQ process IDs and TB IDs. As data of services with different demands can be distinguished during physical-layer transmission, different transmission measures can be adopted at the physical layer to guarantee differentiated service performance. FIG. 9 is a schematic diagram showing mapping from a plurality of DRBs to one HARQ entity in data mapping according to some embodiments of the present disclosure. FIG. 10 is a schematic diagram of packetized data transmission under mapping from a plurality of DRBs to one HARQ entity according to some embodiments of the present disclosure. As shown in FIG. 10, when the SDAP, PDCP, RLC and MAC sublayers are deployed, DRBs can be directly mapped to MAC-layer data, such that a MAC sub-header may even be omitted at the MAC layer in some scenarios.

In an exemplary embodiment, the mapping relationship between one DRB and a plurality of HARQ entities represents mapping of one DRB to a plurality of HARQ entities. In related art, even if one HARQ entity is provided with multiple parallel HARQ processes for TB transmission, the number of TBs and TB size that can be transmitted are extremely limited within one slot scheduling transmission unit (e.g., a slot). When spatial multiplexing is not adopted, one slot can transmit only one TB. When spatial multiplexing is adopted, one slot can transmit up to two TBs. In view of coding and interleaving gains as well as error rate and retransmission latency issues caused by excessively large TB Size (TBS), the bit length (TB size) of one TB is restricted (e.g., a TB cannot exceed 6144 bits in LTE). That is to say, the related art can only support the transmission of TB data of a limited size via one HARQ process of a single HARQ entity within one slot, failing to simultaneously meet the demands of low latency, high reliability, and high throughput. In the embodiments of the present disclosure, a plurality of HARQ entities are used to transmit data of one DRB. For services that need to satisfy low latency, high reliability, and high throughput simultaneously, a plurality of HARQ entities can be used to transmit data concurrently within one time-domain transmission unit. The increased number of available HARQ entities for one DRB means a larger number of TBs can be transmitted simultaneously, which in turn improves data throughput within a short period of time. For example, mapping one DRB to m HARQ entities (where m is an integer greater than 1) allows transmission of up to 2m TBs concurrently under spatial multiplexing. The more HARQ entities one DRB is mapped to, the more TBs can be transmitted within the same time period. This realizes fast mass transmission of data of one service data flow within a short time. Furthermore, transmission failure of one TB only triggers independent retransmission of that TB without affecting transmission of other TB data belonging to the same DRB. FIG. 11 is a schematic diagram showing mapping from one DRB to a plurality of HARQ entities in data mapping according to some embodiments of the present disclosure. FIG. 12 is a schematic diagram of packetized data transmission under mapping from one DRB to a plurality of HARQ entities according to some embodiments of the present disclosure. As shown in FIG. 12, when the SDAP, PDCP, RLC and MAC sublayers are deployed, DRBs can be directly mapped to MAC-layer data, such that a MAC sub-header may even be omitted at the MAC layer in some scenarios.

In an exemplary embodiment, the DRB-HARQ entity mapping information includes at least one of: a group identifier (ID) configured to indicate mapping relationship between DRB and HARQ entity within each group; a DRB ID of the DRB within each group; one or more HARQ entity IDs correspondingly mapped to the DRB ID within each group; one or more HARQ process IDs correspondingly mapped to the DRB ID within each group; one or more Transport Block (TB) IDs correspondingly mapped to the DRB ID within each group; a DRB priority corresponding to the DRB ID within each group; a data mapping rule configured to indicate allocation of data of each DRB to each HARQ entity within each group.

The DRB-HARQ entity mapping information in the foregoing steps is illustrated below by way of examples.

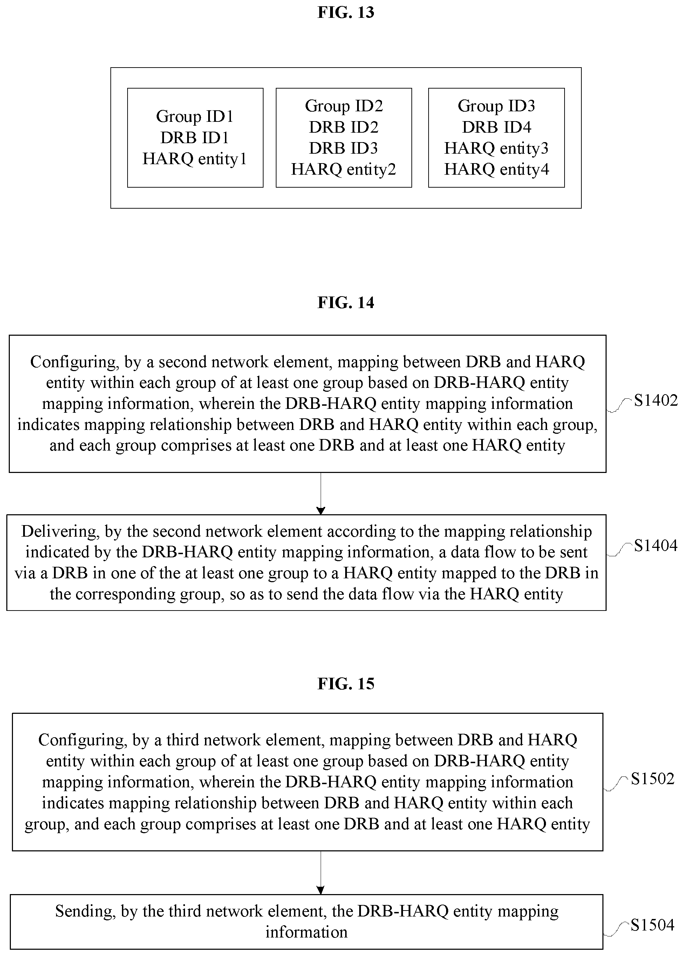

For instance, the DRB-HARQ entity mapping information may include three groups (it should be noted that three groups are merely taken as an example for illustration; more or fewer groups may be deployed in practical applications), corresponding to Group ID 1, Group ID 2, and Group ID 3, respectively. Within the group corresponding to Group ID 1, a one-to-one mapping between DRB 1 and HARQ entity 1 is indicated; within the group corresponding to Group ID 2, both DRB 2 and DRB 3 are indicated to be mapped to HARQ entity 2; within the group corresponding to Group ID 3, DRB 4 is indicated to be mapped to HARQ entity 3 and HARQ entity 4. As an exemplary implementation, each DRB ID in each group is mapped to one or more corresponding HARQ process IDs. When a plurality of DRBs are mapped to one HARQ entity, HARQ process IDs can indicate that data of different DRBs are mapped to different HARQ processes under the same HARQ entity. FIG. 13 is a schematic diagram illustrating DRB-HARQ entity mapping information of three groups according to some embodiments of the present disclosure. As shown in FIG. 13, HARQ process ID information may be additionally configured for Group ID 2 to indicate that DRB 2 is mapped to HARQ process 1 and HARQ process 2 of HARQ entity 2, and that DRB 3 is mapped to HARQ process 3 and HARQ process 4 of HARQ entity 2. As an exemplary implementation, the DRB-HARQ entity mapping information further includes TB IDs mapped to each DRB ID in each group, and different DRBs can be distinguished via TBs. For example, when TBs are numbered globally, different TB serial numbers correspond to different TBs, and different DRBs can be distinguished merely via absolute TB IDs. As an exemplary implementation, the DRB-HARQ entity mapping information further includes HARQ process IDs mapped to each DRB ID in each group and TB IDs under the corresponding HARQ process IDs for distinction. Since one HARQ process can carry two TBs under spatial multiplexing, combining HARQ process IDs and TB IDs under each HARQ process ensures that different DRBs can still be distinguished via TBs when spatial multiplexing is enabled. As an exemplary implementation, the DRB-HARQ entity mapping information further includes DRB priorities. In accordance with the DRB priority corresponding to each data flow, data flows with higher priorities can be scheduled and transmitted preferentially. Taking XR services as an example, Intra-coded picture (I) frames are critical video frames, and data flows of I frames are mapped to DRBs with high priority. Bi-directional interpolated prediction (B) frames and predictive (P) frames are secondary video frames, and data flows of B frames and P frames are mapped to a DRB with low priority. As a result, data flows of I frames can be scheduled preferentially during MAC scheduling, and the network can provide special guarantee for physical-layer transmission performance for I frame data, such as by allocating better time-frequency resources and higher transmit power for physical-layer transmission of I frame data. As an exemplary implementation, the DRB-HARQ entity mapping information further includes a data mapping rule, which specifies the method for allocating data of each DRB to each HARQ entity. For example, for Group ID 2 in FIG. 13, the data mapping rule indicates that DRB 2 is mapped to an HARQ process with an odd HARQ Process ID under HARQ entity 2, and DRB 3 is mapped to an HARQ process with an even HARQ Process ID under HARQ entity 2.

In an exemplary embodiment, the mapping relationship between the plurality of DRBs and one HARQ entity includes at least one of: different DRBs among the plurality of DRBs are mapped to different HARQ processes of one HARQ entity, wherein the different DRBs among the plurality of DRBs are distinguished by respective HARQ process IDs in the HARQ entity; different DRBs among the plurality of DRBs are mapped to different Transport Blocks (TBs) of one HARQ entity, wherein the different DRBs among the plurality of DRBs are distinguished by respective TB IDs in the HARQ entity; different DRBs among the plurality of DRBs are mapped to different TBs of one HARQ entity, wherein the different DRBs among the plurality of DRBs are distinguished by respective HARQ process IDs and respective TB IDs in the HARQ entity.

In the foregoing steps, a plurality of DRBs can be mapped to different processes of the same HARQ entity, in which case different DRBs can be distinguished via respective HARQ process IDs under the HARQ entity. When spatial multiplexing is not adopted, one HARQ process corresponds to one TB. Since TBs are numbered globally such that different TB serial numbers correspond to different TBs, different DRBs can also be distinguished via respective TB IDs of the HARQ entity. When spatial multiplexing is adopted, one HARQ process corresponds to two TBs. In this case, different DRBs can also be mapped to different TBs under the same HARQ process and distinguished via the combination of HARQ process IDs and TB IDs.

In an exemplary embodiment, the mapping relationship between one DRB and the plurality of HARQ entities includes: allocating data on the one DRB to the plurality of HARQ entities according to a data mapping rule, wherein the data mapping rule is configured to indicate allocation of data of each DRB to each HARQ entity within each group.

The method for allocating data of each DRB in each group to each HARQ entity as indicated by the data mapping rule is illustrated by way of example below. For example, for Group ID 2 in FIG. 13, the data mapping rule indicates that DRB 2 is mapped to an HARQ process with an odd HARQ Process ID under HARQ entity 2, and DRB 3 is mapped to an HARQ process with an even HARQ Process ID under HARQ entity 2.

In an exemplary embodiment, the step of configuring, by the first network element, the mapping between the DRB and the HARQ entity within each group based on the DRB-HARQ entity mapping information includes at least one of: directly receiving, by the first network element, a target control signaling message containing the DRB-HARQ entity mapping information, and configuring, by the first network element, the mapping between the DRB and the HARQ entity by using the target control signaling message; sending, by the first network element, a first control signaling message containing a request for the DRB-HARQ entity mapping information, receiving, by the first network element, a target control signaling message containing the DRB-HARQ entity mapping information, and configuring, by the first network element, the mapping between the DRB and the HARQ entity by using the target control signaling message; modifying, by the first network element, the mapping between the DRB and the HARQ entity by using a target control signaling message most recently received, wherein the target control signaling message contains latest DRB-HARQ entity mapping information; updating, by the first network element, the mapping between the DRB and the HARQ entity by using a target control signaling message most recently received, wherein the target control signaling message contains latest DRB-HARQ entity mapping information; releasing, by the first network element, the mapping between the DRB and the HARQ entity originally configured by the first network element, by using a target control signaling message most recently received, wherein the target control signaling message contains latest DRB-HARQ entity mapping information; sending, by the first network element, the DRB-HARQ entity mapping information to a second network element via a second control signaling message containing the DRB-HARQ entity mapping information, so that the second network element sends data according to the DRB-HARQ entity mapping information, wherein the second control signaling message includes at least one of: a Radio Resource Control (RRC) message, Downlink Control Information (DCI).

In the foregoing steps, the target control signaling message includes at least one of: a Radio Resource Control (RRC) message, a Non-Access Stratum (NAS) message, Downlink Control Information (DCI), Uplink Control Information (UCI). The first control signaling message includes, but is not limited to, an RRC message, a NAS message, DCI, UCI.

In an exemplary embodiment, the step of directly receiving, by the first network element, the target control signaling message containing the DRB-HARQ entity mapping information includes at least one of: receiving, by the first network element, the target control signaling message from a second network element, wherein the second network element is a network element that directly sends data to the first network element, and the data is processed by the first network element according to the DRB-HARQ entity mapping information after the first network element receives the data; receiving, by the first network element, the target control signaling message from a third network element, wherein the third network element is a network element that does not directly send data to the first network element, and the data is processed by the first network element according to the DRB-HARQ entity mapping information after the first network element receives the data; receiving, by the first network element, the target control signaling message from the third network element via the second network element, wherein the third network element is a network element that does not directly send data to the first network element, the second network element is a network element that directly sends data to the first network element, and the data is processed by the first network element according to the DRB-HARQ entity mapping information after the first network element receives the data.

In the foregoing steps, the step of receiving, by the first network element, the target control signaling message from the second network element includes, but is not limited to, at least one of the following cases. When the first network element is a UE and the second network element is a base station, downlink transmission is performed between the second network element and the first network element, and the target control signaling message is an RRC message (such as an RRC Reconfiguration message) or a DCI message sent by the base station. When the first network element is a base station and the second network element is a UE, uplink transmission is performed between the second network element and the first network element, and the base station sends a message containing the DRB-HARQ entity mapping information to the UE (for example, the DRB-HARQ entity mapping information is contained in an RRC message or a DCI message). Since the base station itself can send the message containing the DRB-HARQ entity mapping information, the base station inherently knows the mapping relationship. Accordingly, the base station can deliver data received by an HARQ entity to the upper layer via a DRB mapped to the HARQ entity according to the DRB-HARQ entity mapping information previously sent to the UE. The step of receiving, by the first network element, the target control signaling message from the third network element includes, but is not limited to, the following case. When the first network element is a UE and the third network element is a base station that only transmits the target control signaling message (without user-plane data transmission), the target control signaling message is an RRC message or a DCI message from the base station, and the second network element is a base station that only performs data transmission (without control signaling). In this case, the first network element can configure, according to the RRC message from the third network element, the mapping relationship between HARQ entities and DRBs for data received from the second network element, and deliver data to the upper layer based on the configured mapping relationship. The step of receiving, by the first network element, the target control signaling message from the third network element via the second network element includes, but is not limited to, the following case. When the first network element is a UE, the second network element is a DU (capable of directly interacting with the UE via control signaling messages and data transmission messages), and the third network element is a CU, since the CU does not interact directly with the UE, RRC messages generated by the CU need to be sent to the UE via the DU.

In an exemplary embodiment, the UE obtains static DRB-HARQ entity mapping information for data transmission between the UE and a base station B by receiving an RRC message from a base station A, where the RRC message contains DRB-HARQ entity mapping information of base station B. The UE then obtains real-time dynamic DRB-HARQ entity mapping information for data transmission between the UE and base station B by receiving a DCI message from base station B, where the DCI message contains real-time DRB-HARQ entity mapping information of base station B.

In an exemplary embodiment, the target control signaling message includes at least one of: an RRC message, a NAS message, DCI, UCI.

In an exemplary embodiment, the first control signaling message includes at least one of: an RRC message, a NAS message, DCI, UCI.

In an exemplary embodiment, the RRC message includes at least one of: an RRC Connection Setup message, an RRC Configuration message, an RRC Reconfiguration message, an RRC Transfer message, an RRC Request message, an RRC Request Response message.

In an exemplary embodiment, the first network element includes at least one of: a RAN, a UE, a CU, a DU, a relay node, an IAB node.

In an exemplary embodiment, the second network element includes at least one of: a RAN, a UE, a CU, a DU, a relay node, an IAB node.

In an exemplary embodiment, the third network element includes at least one of: a RAN, a UE, a CU, a DU, a relay node, an IAB node.

FIG. 14 is a second flowchart of a data transmission method according to some embodiments of the present disclosure. As shown in FIG. 14, the flow includes the following steps S1402 and S1404.

In step S1402, a second network element configures mapping between Data Radio Bearer (DRB) and Hybrid Automatic Repeat reQuest (HARQ) entity within each group of at least one group based on DRB-HARQ entity mapping information, wherein the DRB-HARQ entity mapping information indicates mapping relationship between DRB and HARQ entity within each group, and each group includes at least one DRB and at least one HARQ entity.

In step S1404, the second network element delivers, according to the mapping relationship indicated by the DRB-HARQ entity mapping information, a data flow to be sent via a DRB in one of the at least one group to a HARQ entity mapped to the DRB in the corresponding group, so as to send the data flow via the HARQ entity.

In the foregoing steps, when configuring the mapping relationship between DRBs and HARQ entities, the second network element clearly indicates the mapping mode between each DRB and each HARQ entity. Assume there are three groups of mapping information (it is understandable that there may be more or fewer groups of mapping information; three groups are used merely as an example for illustration): DRB 1 is mapped to HARQ entity 1; DRB 2 and DRB 3 are mapped to HARQ entity 2; DRB 4 is mapped to HARQ entity 3 and HARQ entity 4. For instance, data flow 1 and data flow 2 carry data with identical service characteristics, while data flow 3, data flow 4 and data flow 5 carry data with distinct service characteristics. The services corresponding to data flow 3 and data flow 4 are interrelated. When transmitting data flows, the second network element transmits data flow 1 and data flow 2 to HARQ entity 1 of the second network element via DRB 1 according to the configured mapping relationships; the second network element transmits data flow 3 and data flow 4 to HARQ entity 2 at the transmitting side via DRB 2 and DRB 3; and the second network element transmits data flow 5 to HARQ entity 3 and HARQ entity 4 of the second network element via DRB 4. At the MAC layer, data mapped to a HARQ entity is carried in HARQ processes of the HARQ entity and transmitted at the physical layer in the form of Transport Blocks (TBs). Each HARQ entity is provided with a plurality of parallel HARQ processes to support TB transmission under corresponding DRBs.

Through the above steps, mappings between DRBs and HARQ entities can be configured based on DRB-HARQ entity mapping information, and data with different service characteristics can be transmitted on demand. As a result, data transmission can flexibly meet the underlying transmission demands of various services, which greatly improves service transmission capability and service performance experience.

In an exemplary embodiment, the mapping relationship between the DRB and the HARQ entity within each group includes at least one of: a mapping relationship between one DRB and one HARQ entity; a mapping relationship between one DRB and a plurality of HARQ entities; a mapping relationship between a plurality of DRBs and one HARQ entity.

In an exemplary embodiment, the DRB-HARQ entity mapping information includes at least one of: a group identifier (ID) configured to indicate the mapping relationship between the DRB and the HARQ entity within each group; a DRB ID of the DRB within each group; one or more HARQ entity IDs correspondingly mapped to the DRB ID within each group; one or more HARQ process IDs correspondingly mapped to the DRB ID within each group; one or more Transport Block (TB) IDs correspondingly mapped to the DRB ID within each group; a DRB priority corresponding to the DRB ID within each group; a data mapping rule configured to indicate allocation of data of each DRB to each HARQ entity within each group.

In an exemplary embodiment, the mapping relationship between the plurality of DRBs and one HARQ entity includes at least one of: different DRBs among the plurality of DRBs are mapped to different HARQ processes of one HARQ entity, wherein the different DRBs among the plurality of DRBs are distinguished by respective HARQ process IDs in the HARQ entity; different DRBs among the plurality of DRBs are mapped to different Transport Blocks (TBs) of one HARQ entity, wherein the different DRBs among the plurality of DRBs are distinguished by respective TB IDs in the HARQ entity; different DRBs among the plurality of DRBs are mapped to different TBs of one HARQ entity, wherein the different DRBs among the plurality of DRBs are distinguished by respective HARQ process IDs and respective TB IDs in the HARQ entity.

In an exemplary embodiment, the mapping relationship between one DRB and the plurality of HARQ entities includes: allocating data on the one DRB to the plurality of HARQ entities according to a data mapping rule, wherein the data mapping rule is configured to indicate allocation of data of each DRB to each HARQ entity within each group.

In an exemplary embodiment, the step of configuring, by the second network element, the mapping between the DRB and the HARQ entity within each group based on the DRB-HARQ entity mapping information includes at least one of: receiving, by the second network element, a third control signaling message containing the DRB-HARQ entity mapping information, and configuring, by the second network element, the mapping between the DRB and the HARQ entity by using the third control signaling message; sending, by the second network element, a fourth control signaling message containing a request for the DRB-HARQ entity mapping information, receiving, by the second network element, a third control signaling message containing the DRB-HARQ entity mapping information, and configuring, by the second network element, the mapping between the DRB and the HARQ entity by using the third control signaling message; modifying, by the second network element, the mapping between the DRB and the HARQ entity by using a third control signaling message most recently received, wherein the third control signaling message contains latest DRB-HARQ entity mapping information; updating, by the second network element, the mapping between the DRB and the HARQ entity by using a third control signaling message most recently received, wherein the third control signaling message contains latest DRB-HARQ entity mapping information; releasing, by the second network element, the mapping between the DRB and the HARQ entity originally configured by the second network element, by using a third control signaling message most recently received, wherein the third control signaling message contains latest DRB-HARQ entity mapping information.

In an exemplary embodiment, the step of receiving, by the second network element, the third control signaling message containing the DRB-HARQ entity mapping information includes at least one of: receiving, by the second network element, the third control signaling message containing the DRB-HARQ entity mapping information from a first network element, wherein the first network element is a network element that directly receives data from the second network element, and the data is sent by the second network element according to the DRB-HARQ entity mapping information; receiving, by the second network element, the third control signaling message containing the DRB-HARQ entity mapping information from a third network element, wherein the third network element is a network element that does not directly receive data from the second network element, and the data is sent by the second network element according to the DRB-HARQ entity mapping information; receiving, by the second network element, the third control signaling message containing the DRB-HARQ entity mapping information from the third network element via the first network element, wherein the first network element is a network element that directly receives data from the second network element, the third network element is a network element that does not directly receive data from the second network element, and the data is sent by the second network element according to the DRB-HARQ entity mapping information.

In an exemplary embodiment, the method further includes: sending, by the second network element, a fifth control signaling message (such as an RRC Reconfiguration message or a DCI message) containing the DRB-HARQ entity mapping information to the first network element, wherein the first network element is a network element that receives data from the second network element.

In the foregoing steps, when the first network element is a UE and the second network element is a base station, downlink transmission is performed between the second network element and the first network element. In this case, the base station sends the DRB-HARQ entity mapping information and downlink data to the UE, and the downlink data can be sent via a HARQ entity corresponding to the DRB. After receiving the DRB-HARQ entity mapping information, the UE can learn how to use HARQ entities and DRBs to receive data and deliver data to the upper layer.

In an exemplary embodiment, before sending, by the second network element, the fifth control signaling message containing the DRB-HARQ entity mapping information to the first network element, the method further includes: receiving, from the first network element by the second network element, a sixth control signaling message containing a request for the DRB-HARQ entity mapping information. For example, the UE first sends to the base station a sixth control signaling message containing a request for DRB-HARQ entity mapping information (the sixth control signaling message may be an RRC Request message or a UCI message). After receiving the request message, the base station sends to the UE the fifth control signaling message containing the DRB-HARQ entity mapping information (the fifth control signaling message may be an RRC Reconfiguration message or a DCI message).

In an exemplary embodiment, the third control signaling message includes at least one of: an RRC message, a Non-Access Stratum (NAS) message, Downlink Control Information (DCI), Uplink Control Information (UCI).

In an exemplary embodiment, the fourth control signaling message includes at least one of: an RRC message, a Non-Access Stratum (NAS) message, Downlink Control Information (DCI), Uplink Control Information (UCI).

In an exemplary embodiment, the RRC message includes at least one of: an RRC Connection Setup message, an RRC Configuration message, an RRC Reconfiguration message, an RRC Transfer message, an RRC Request message, an RRC Request Response message.

In an exemplary embodiment, the step of delivering, by the second network element, the data flow to be sent via the DRB in one of the at least one group to the HARQ entity mapped to the DRB in the corresponding group, so as to send the data flow via the HARQ entity includes: sending the data flow according to service characteristics of the data flow to be sent, wherein data flows with different service characteristics are delivered via different DRBs to respective HARQ entities mapped to the different DRBs.

In the foregoing steps, data flows with different service characteristics can be delivered via different DRBs to corresponding mapped HARQ entities for transmission. The transmission scheme is illustrated by way of example below. Assume data flow 1 and data flow 2 carry data with identical service characteristics, and data flow 3 and data flow 4 carry data with distinct service characteristics. For instance, data flow 1 and data flow 2 are transmitted via DRB 1, and data flow 3 and data flow 4 are transmitted via DRB 2 and DRB 3, respectively. The manners for the second network element to acquire service characteristics include, but are not limited to, at least one of: receiving service characteristic information from a core network; parsing Non-Access Stratum (NAS) signaling to obtain service characteristic information; parsing QoS parameter information to obtain service characteristic information; parsing service characteristic information carried in-band within data flows to obtain the service characteristic information; acquiring service characteristic information by performing deep packet analysis via Deep Packet Inspection (DPI); acquiring service characteristic information via Artificial Intelligence (AI) inference; acquiring service characteristic information through big data analysis.

In an exemplary embodiment, the second network element includes at least one of: a Radio Access Network (RAN), a User Equipment (UE), a Central Unit (CU), a Distributed Unit (DU), a relay node, an Integrated Access and Backhaul (IAB) node.

In an exemplary embodiment, the first network element includes at least one of: a Radio Access Network (RAN), a User Equipment (UE), a Central Unit (CU), a Distributed Unit (DU), a relay node, an Integrated Access and Backhaul (IAB) node.

In an exemplary embodiment, the third network element includes at least one of: a Radio Access Network (RAN), a User Equipment (UE), a Central Unit (CU), a Distributed Unit (DU), a relay node, an Integrated Access and Backhaul (IAB) node.

FIG. 15 is a third flowchart of a data transmission method according to some embodiments of the present disclosure. As shown in FIG. 15, the flow includes the following steps S1502 and S1504.

In step S1502, a third network element configures mapping between Data Radio Bearer (DRB) and Hybrid Automatic Repeat reQuest (HARQ) entity within each group of at least one group based on DRB-HARQ entity mapping information, wherein the DRB-HARQ entity mapping information indicates mapping relationship between DRB and HARQ entity within each group, and each group includes at least one DRB and at least one HARQ entity.

In step S1504, the third network element sends the DRB-HARQ entity mapping information.

Through the above steps, mappings between DRBs and HARQ entities are configured based on the DRB-HARQ entity mapping information. As a result, data requiring differentiated transmission can be transmitted separately at the physical layer to realize differentiated service performance. The scheme effectively solves the problem existing in the related art that data of different DRBs are multiplexed together at the MAC layer such that differentiated physical-layer transmission cannot be performed, improves the flexibility of physical-layer data transmission, flexibly meets the underlying transmission demands of different services, and greatly enhances service transmission capability and service performance experience.

In an exemplary embodiment, the mapping relationship between the DRB and the HARQ entity within each group includes at least one of: a mapping relationship between one DRB and one HARQ entity; a mapping relationship between one DRB and a plurality of HARQ entities; a mapping relationship between a plurality of DRBs and one HARQ entity.

In an exemplary embodiment, the DRB-HARQ entity mapping information includes at least one of: a group identifier (ID) configured to indicate the mapping relationship between the DRB and the HARQ entity within each group; a DRB ID of the DRB within each group; one or more HARQ entity IDs correspondingly mapped to the DRB ID within each group; one or more HARQ process IDs correspondingly mapped to the DRB ID within each group; one or more Transport Block (TB) IDs correspondingly mapped to the DRB ID within each group; a DRB priority corresponding to the DRB ID within each group; a data mapping rule configured to indicate allocation of data of each DRB to each HARQ entity within each group.

In an exemplary embodiment, the mapping relationship between the plurality of DRBs and one HARQ entity includes at least one of: different DRBs among the plurality of DRBs are mapped to different HARQ processes of one HARQ entity, wherein the different DRBs among the plurality of DRBs are distinguished by respective HARQ process IDs in the HARQ entity; different DRBs among the plurality of DRBs are mapped to different Transport Blocks (TBs) of one HARQ entity, wherein the different DRBs among the plurality of DRBs are distinguished by respective TB IDs in the HARQ entity; different DRBs among the plurality of DRBs are mapped to different TBs of one HARQ entity, wherein the different DRBs among the plurality of DRBs are distinguished by respective HARQ process IDs and respective TB IDs in the HARQ entity.

In an exemplary embodiment, the mapping relationship between one DRB and the plurality of HARQ entities includes: allocating data on the one DRB to the plurality of HARQ entities according to a data mapping rule, wherein the data mapping rule is configured to indicate allocation of data of each DRB to each HARQ entity within each group.

In an exemplary embodiment, the step of sending, by the third network element, the DRB-HARQ entity mapping information includes at least one of: directly sending, by the third network element, the DRB-HARQ entity mapping information to a first network element, so that when receiving data, the first network element configures the mapping between the DRB and the HARQ entity within each group, and delivers, according to the mapping between the DRB and the HARQ entity within each group, data received by an HARQ entity included in each group to an upper layer via a DRB mapped to the HARQ entity in the corresponding group; directly sending, by the third network element, the DRB-HARQ entity mapping information to a second network element, so that when sending data, the second network element configures the mapping between the DRB and the HARQ entity within each group, and delivers, according to the mapping between the DRB and the HARQ entity within each group, a data flow to be sent via a DRB in one of the at least one group to a HARQ entity mapped to the DRB in the corresponding group, so as to send the data flow via the HARQ entity; sending, by the third network element, the DRB-HARQ entity mapping information to the first network element via the second network element, so that the first network element processes data mapping according to the DRB-HARQ entity mapping information during data transmission.

In an exemplary embodiment, the step of sending, by the third network element, the DRB-HARQ entity mapping information includes: sending, by the third network element, the DRB-HARQ entity mapping information via a seventh control signaling message, wherein the seventh control signaling message includes at least one of: a Radio Resource Control (RRC) message, a Non-Access Stratum (NAS) message, Downlink Control Information (DCI), Uplink Control Information (UCI).

In an exemplary embodiment, the RRC message includes at least one of: an RRC Connection Setup message, an RRC Configuration message, an RRC Reconfiguration message, an RRC Transfer message, an RRC Request message, an RRC Request Response message.

In an exemplary embodiment, the third network element includes at least one of: a Radio Access Network (RAN), a User Equipment (UE), a Central Unit (CU), a Distributed Unit (DU), a relay node, an Integrated Access and Backhaul (IAB) node.

In an exemplary embodiment, the first network element includes at least one of: a Radio Access Network (RAN), a User Equipment (UE), a Central Unit (CU), a Distributed Unit (DU), a relay node, an Integrated Access and Backhaul (IAB) node.

In an exemplary embodiment, the second network element includes at least one of: a Radio Access Network (RAN), a User Equipment (UE), a Central Unit (CU), a Distributed Unit (DU), a relay node, an Integrated Access and Backhaul (IAB) node.

The application of the target control signaling message in the foregoing steps will be illustrated by way of example below. A Radio Resource Control (RRC) message refers to a control signaling message exchanged between a base station and a UE. In both 4G and 5G systems, RRC messages are generated by the RRC layer of the base station. An RRC setup message is used to establish an RRC connection when the UE is in an idle state (e.g., the UE is in RRC_IDLE state). The RRC setup message includes an RRC Setup Request message sent by the UE to the base station (such as an RRCSetupRequest message or an RRCReestablishmentRequest message) and an RRC Setup message sent by the base station to the UE (e.g., an RRCSetup message). After the UE establishes an RRC connection, the UE sends an RRC Setup Complete message (e.g., an RRCSetupComplete message). The UE may use an RRC Setup Request message to send a request for DRB-HARQ entity mapping information, and the base station may use an RRC Setup message to send DRB-HARQ entity mapping information to instruct the UE to perform radio bearer configuration. As an exemplary implementation, the UE may also use an RRC Setup Complete message to send DRB-HARQ entity mapping information. An RRC Reconfiguration message (RRCReconfiguration message) is used to modify an RRC connection when the UE is in a connected state (e.g., RRC_CONNECTED). The UE receives the RRCReconfiguration message and performs radio bearer configuration according to radio bearer configuration information contained in the RRCReconfiguration message. The base station may include DRB-HARQ entity mapping information in an RRC Reconfiguration message and send the RRC Reconfiguration message to the UE, and the UE performs radio bearer configuration according to the DRB-HARQ entity mapping information after receiving the RRC Reconfiguration message containing the DRB-HARQ entity mapping information. As an exemplary implementation, the DRB-HARQ entity mapping information is contained in an Information Element (IE) of the RRC Reconfiguration message, for example, contained in a radio bearer configuration IE, a MAC configuration IE, an RLC configuration IE, or a PDCP configuration IE. For instance, the UE receives a RadioBearerConfig IE containing the DRB-HARQ entity mapping information, and establishes mapping associations between respective DRBs and respective HARQ entities on the UE side according to the DRB-HARQ entity mapping information. As another example, the UE receives an RLC-BearerConfig IE containing the DRB-HARQ entity mapping information, and establishes mapping associations between respective DRBs and respective HARQ entities on the UE side according to the DRB-HARQ entity mapping information.

A 5G base station may be split into two functional parts: a Central Unit (CU) and a Distributed Unit (DU). The CU serves as the centralized unit of the base station, while the DU serves as the distributed unit of the base station. The CU and the DU interact via the F1 interface. High-layer physical layer, MAC and RLC layers with high real-time requirements are processed in the DU, whereas the PDCP and RRC layers with low real-time requirements are processed in the CU. Under a non-integrated (separated or split) deployment of CU and DU, the DU first receives information from the UE and forwards the information to the CU via the F1 interface. When downlink data arrives, the CU processes the data first, sends the processed data to the DU via the F1 interface, and the DU then delivers the data to the UE via the air interface. The CU sends an RRC message containing the DRB-HARQ entity mapping information to the DU, the DU forwards the DRB-HARQ entity mapping information to the UE, and the DU and the UE perform mapping for uplink and downlink data transmission according to the mapping relationship. For downlink transmission, according to the DRB-HARQ entity mapping information contained in the RRC message issued by the CU, the DU sends data of each DRB via the HARQ entity mapped to the corresponding DRB. For uplink transmission, according to the DRB-HARQ entity mapping information contained in the RRC message issued by the CU, the DU delivers data received by each HARQ entity to the upper layer via the DRB mapped to the corresponding HARQ entity.

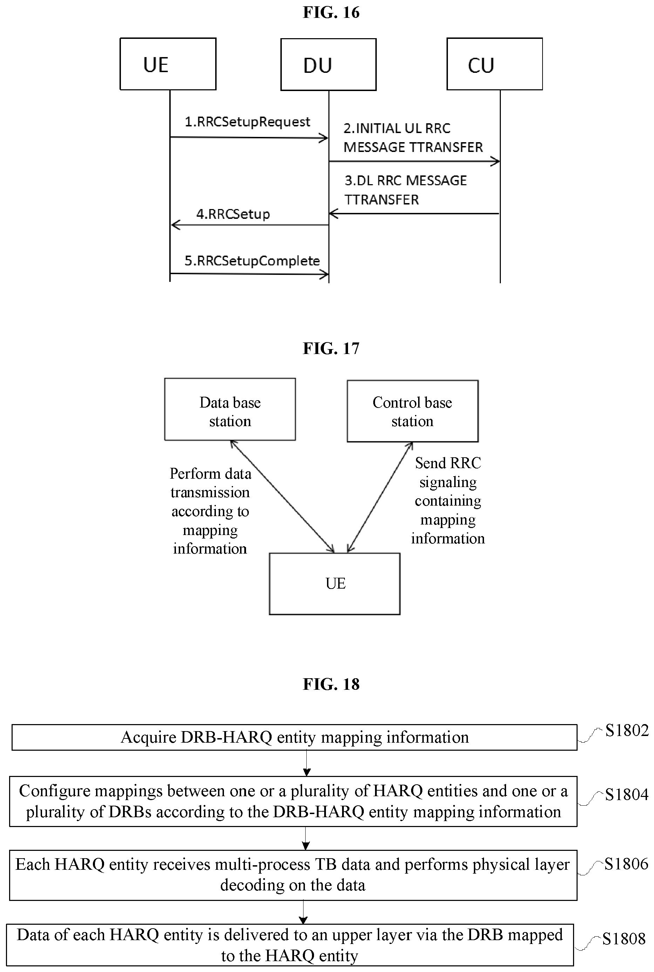

For a CU-DU separated (split) deployment scenario, after the UE sends an RRC connection setup request, the DU forwards the RRC setup request message of the UE to the CU via a transfer message (e.g., Initial UL RRC Message Transfer) to forward the initial uplink RRC message from the DU to the Control Plane of the CU (CU-CP). The CU allocates radio resources for the UE by sending a downlink RRC message transfer message (e.g., DL RRC Message Transfer) to the DU. FIG. 16 is a first schematic diagram of an RRC message transmission method according to some embodiments of the present disclosure. As shown in FIG. 16, the DU acts as a forwarder for RRC messages between the CU and the UE. In the embodiments of the present disclosure, the CU may configure an RRC message containing DRB-HARQ entity mapping information and forward the RRC message to the UE via the DU. The UE may also send an RRC message containing a request for DRB-HARQ entity mapping information to the CU via the DU.

In 5G, a base station provides control information, such as physical resource allocation, power control, HARQ, or the like, for uplink and downlink scheduling to a UE through DCI. The DCI may be transmitted to the UE on a Physical Downlink Control Channel (PDCCH) or a Physical Downlink Shared Channel (PDSCH). In 5G, a UE provides control information, such as uplink scheduling information, HARQ feedback, channel measurement, or the like, to the base station through UCI. The UCI may be transmitted to the base station on a Physical Uplink Control Channel (PUCCH) or a Physical Uplink Shared Channel (PUSCH). Static or semi-static configurations between the base station and the UE are generally completed through RRC messages, while dynamic configurations between the base station and the UE are generally completed through DCI and UCI. Static or semi-static configuration of DRB-HARQ entity mapping information may be performed first via an RRC message, and dynamic configuration of DRB-HARQ entity mapping information may then be performed via DCI and/or UCI according to dynamic changes of the network and services. As an exemplary implementation, the UE sends a demand for DRB-HARQ entity mapping information via UCI, and the base station sends the DRB-HARQ entity mapping information to the UE via DCI after receiving the demand. For downlink transmission, the base station configures DRB-HARQ entity mapping information and sends downlink data according to the DRB-HARQ entity mapping information. The UE receives the DRB-HARQ entity mapping information, and receives downlink data and delivers the downlink data to the upper layer according to the mapping relationship. For uplink transmission, the base station configures DRB-HARQ entity mapping information and sends the information to the UE. The UE receives the DRB-HARQ entity mapping information and sends uplink data according to the DRB-HARQ entity mapping information, and the base station receives the uplink data according to the DRB-HARQ entity mapping information. For both downlink and uplink transmission, the UE needs to obtain the DRB-HARQ entity mapping information from the base station to learn the mapping relationship between DRBs and HARQ entities. The base station sends the DRB-HARQ entity mapping information to the UE via a message such as an RRC message and a DCI message to inform the UE of the mapping relationship, and the UE processes received data according to the mapping relationship. The base station may send the DRB-HARQ entity mapping information via an RRC Setup message during RRC connection setup, or via an RRC Reconfiguration message after RRC connection setup. When the base station needs to modify the DRB-HARQ entity mapping relationship in real time, the base station sends the DRB-HARQ entity mapping information via DCI. An RRC message is used for static or semi-static DRB-HARQ entity mapping configuration in the network, while a DCI message is used for dynamic real-time DRB-HARQ entity mapping configuration in the network. After receiving the DRB-HARQ entity mapping information, the UE determines the corresponding DRB mapped to each HARQ entity on the receiving side according to the DRB-HARQ entity mapping information, and delivers data to the upper layer via the corresponding DRB. When the UE is in an idle state, the DRB-HARQ entity mapping information is configured via an RRC Connection Setup message. As an exemplary implementation, the UE first sends an RRC connection request containing a request for DRB-HARQ entity mapping information, then receives an RRC Connection Setup message containing the DRB-HARQ entity mapping information to acquire the DRB-HARQ entity mapping information and complete mapping configuration. When the UE is in a connected state, the UE may acquire the DRB-HARQ entity mapping information via an RRC Reconfiguration message to complete mapping configuration. As an exemplary implementation, when the UE needs to adjust the DRB-HARQ entity mapping relationship, the base station may actively initiate a dynamic configuration message of the DRB-HARQ entity mapping information and send the message to the UE via DCI. As an exemplary implementation, when the UE needs to adjust the DRB-HARQ entity mapping relationship, the UE may actively send a dynamic configuration request message of DRB-HARQ entity mapping information via UCI, and the base station then sends dynamic configuration information of DRB-HARQ entity mapping information to the UE via DCI. As an exemplary implementation, the dynamic configuration request message of DRB-HARQ entity mapping information actively sent by the UE via UCI contains suggested request information for one or a plurality of groups of DRB-HARQ entity mappings. For example, the UE requests the following mapping information from the base station: DRB 1 is mapped to HARQ entity 1; DRB 2 is mapped to HARQ entity 2 and HARQ entity 3. As an exemplary implementation, an RRC message is used to statically or semi-statically send long-cycle DRB-HARQ entity mapping information, including a group ID indicating mapping relationships between DRBs and HARQ entities, one or more DRB IDs within each group, one or more HARQ entity IDs correspondingly mapped to each DRB ID within each group, a DRB priority corresponding to each DRB within each group, and a data mapping rule specifying allocation of data of each DRB to each HARQ entity. On the basis of the mapping relationships delivered by an RRC message, a DCI message is used to send short-cycle or dynamically changed DRB-HARQ entity mapping information, including one or more one or more HARQ process IDs correspondingly mapped to each DRB ID within each group and one or more TB IDs correspondingly mapped to each DRB ID within each group.

In an exemplary embodiment, the base station sends DRB-HARQ entity mapping information to the UE via a DCI message to instruct the UE to complete mapping configuration between DRBs and HARQ entities on the UE side. After receiving the DCI message, the UE acquires the DRB-HARQ entity mapping information from the DCI message and performs mapping configuration between respective DRBs and respective HARQ entities on the UE side according to the DRB-HARQ entity mapping information. As an exemplary implementation, the mapping configuration steps include, but are not limited to: establishing a DRB-HARQ entity mapping relationship, modifying a DRB-HARQ entity mapping relationship, releasing a DRB-HARQ entity mapping relationship, or replacing the original DRB-HARQ entity mapping relationship on the UE side with a new DRB-HARQ entity mapping relationship.

In an exemplary embodiment, the base station sends the latest DRB-HARQ entity mapping information to the UE via a DCI message to instruct the UE to modify the DRB-HARQ entity mapping relationships on the UE side. After receiving the DCI message, the UE acquires the latest DRB-HARQ entity mapping information from the DCI message and modifies the mapping relationships between respective DRBs and respective HARQ entities on the UE side according to the DRB-HARQ entity mapping information.

In an exemplary embodiment, the base station first sends DRB-HARQ entity mapping information to the UE via an RRC message to instruct the UE to configure mappings between DRBs and HARQ entities on the UE side. When the mapping relationships need to be updated, the base station then sends real-time DRB-HARQ entity mapping information to the UE via DCI to instruct the UE to update the DRB-HARQ entity mapping relationships on the UE side. After receiving the DCI message, the UE acquires the latest DRB-HARQ entity mapping information from the DCI message and updates the mapping relationships between respective DRBs and respective HARQ entities on the UE side according to the DRB-HARQ entity mapping information.

In an exemplary embodiment, the base station sends the latest DRB-HARQ entity mapping information to the UE via a DCI message to instruct the UE to delete (or release) the original DRB-HARQ entity mapping relationships on the UE side. After receiving the DCI message, the UE acquires the latest DRB-HARQ entity mapping information from the DCI message and deletes (or releases) the original mapping relationships between respective DRBs and respective HARQ entities on the UE side according to the DRB-HARQ entity mapping information.

In an exemplary embodiment, the base station may not send DRB-HARQ entity mapping information to the UE via an RRC message, but directly send the DRB-HARQ entity mapping information to the UE via DCI. The UE acquires the DRB-HARQ entity mapping information solely from the received DCI message and configures the original DRB-HARQ entity mapping relationships on the UE side according to the DRB-HARQ entity mapping information.

In an exemplary embodiment, the UE may request DRB-HARQ entity mapping information from the base station via UCI. Examples include requesting to establish a mapping relationship between DRB 1, DRB 2 and HARQ entity 1; requesting to release the mapping relationship between DRB 1, DRB 2 and HARQ entity 1; requesting to adjust the mapping relationship from mapping DRB 1 and DRB 2 to HARQ entity 1 to mapping DRB 1 solely to HARQ entity 1. After receiving the request for DRB-HARQ entity mapping information contained in the UCI, the base station determines the latest DRB-HARQ entity mapping information.

The data mapping procedure of DRB-HARQ entity mapping information is illustrated below in conjunction with a control-and-user-plane separated (split) scenario. Under a separated (split) control signaling and data transmission architecture, there exist base stations dedicated to transmitting only control signaling and base stations dedicated to transmitting only user data. A base station dedicated to control signaling (shortened as control base station) adopts low-frequency carriers to achieve wide coverage of control signaling, while a base station dedicated to data transmission (shortened as data base station) adopts high-frequency carriers to realize short-range high-speed data transmission. FIG. 17 is a second schematic diagram of an RRC message transmission method according to some embodiments of the present disclosure. In such a scenario, the control base station is responsible for RRC message transmission, and the DRB-HARQ entity mapping information of the data base station is contained in the RRC message sent by the control base station. The data base station performs downlink data transmission or uplink data reception using the DRB-HARQ entity mapping information contained in the RRC message sent by the control base station. As an exemplary implementation, the control base station may send the DRB-HARQ entity mapping information to the data base station via an inter-base-station interface (e.g., the X2 interface or Xn interface). The UE receives the RRC message sent by the control base station, and receives downlink data from the data base station or transmits uplink data to the data base station according to the DRB-HARQ entity mapping information. For a networking scenario consisting of macro base stations and micro base stations, macro base stations feature a wide coverage range. A macro base station may provide control signaling transmission for micro base stations. The macro base station provides RRC control signaling and data transmission for UEs connected to the macro base station, and also provides RRC control signaling for UEs connected to micro base stations. The macro base station sends an RRC message containing DRB-HARQ entity mapping information corresponding to each micro base station-UEs served by each micro base station, so as to deliver DRB-HARQ entity mapping instructions to the micro base station and UEs connected to the micro base station.

The overall method of the embodiments of the present solution will be described below in conjunction with exemplary embodiments.

FIG. 18 is a fourth flowchart of a data transmission method according to some embodiments of the present disclosure. The steps executed at a data receiving end are as follows.
In step S1802: Acquire DRB-HARQ entity mapping information;
In step S1804: Configure mappings between one or a plurality of HARQ entities and one or a plurality of DRBs according to the DRB-HARQ entity mapping information;
In step S1806: Each HARQ entity receives multi-process TB data and performs physical-layer decoding on the data;
In step S1808: Data of each HARQ entity is delivered to an upper layer via the DRB mapped to the HARQ entity.

In the foregoing steps, manners for acquiring the DRB-HARQ entity mapping information include, but are not limited to: receiving control signaling (corresponding to the target control signaling described above) containing the DRB-HARQ entity mapping information. Such control signaling may be an RRC message or a DCI message. For example, the DRB-HARQ entity mapping information may be transmitted via an RRC Reconfiguration message, or dynamically indicated by DCI information transmitted on a PDCCH, and so forth.

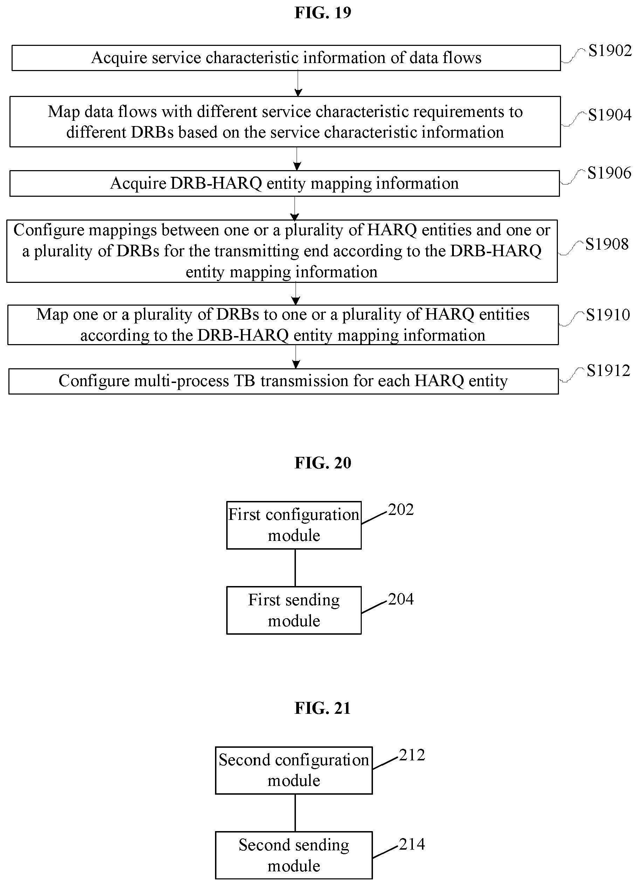

FIG. 19 is a fifth flowchart of a data transmission method according to some embodiments of the present disclosure. The steps executed at a data transmitting end are as follows.
In step S1902: Acquire service characteristic information of data flows;
In step S1904: Map data flows with different service characteristic requirements to different DRBs based on the service characteristic information;
In step S1906: Acquire DRB-HARQ entity mapping information;
In step S1908: Configure mappings between one or a plurality of HARQ entities and one or a plurality of DRBs for the transmitting end according to the DRB-HARQ entity mapping information;
In step S1910: Map one or a plurality of DRBs to one or a plurality of HARQ entities according to the DRB-HARQ entity mapping information;
In step S1912: Configure multi-process TB transmission for each HARQ entity.
In step S1906, after the transmitting end acquires the DRB-HARQ entity mapping information, the transmitting end sends a message containing the DRB-HARQ entity mapping information to the receiving end.

The processing steps on each network element side are illustrated below by taking the second network element being a base station and the first network element being a UE as an example.

### Exemplary Embodiment 1: Data mapping procedure on the base station side for downlink transmission

When the base station sends data to the UE, the base station configures DRB-HARQ entity mapping information and sends data according to the DRB-HARQ entity mapping information. In addition, the base station informs the UE of the DRB-HARQ entity mapping information via an RRC message (such as an RRC Connection Setup message or an RRC Reconfiguration message).

The detailed steps performed by the base station serving as a transmitting end during downlink transmission are described as follows.

In step 1: The base station maps data flows with different service characteristic information to different DRBs.

In step 2: The base station configures DRB-HARQ entity mapping relationships and sends the mapping relationships to the UE via an RRC message.

When configuring the DRB-HARQ entity mapping relationships, the base station explicitly indicates the mappings between DRBs and HARQ entities. For example, DRB 1 is mapped to HARQ entity 1; DRB 2 and DRB 3 are mapped to different HARQ processes of HARQ entity 2; DRB 4 is mapped to HARQ entity 3 and HARQ entity 4. As an exemplary implementation, the base station sends the mapping relationships to the UE via an RRC Connection Setup message or an RRC Reconfiguration message, so that the UE can learn the mappings between DRBs and HARQ entities. As an exemplary implementation, the DRB-HARQ entity mapping information may indicate a plurality of groups of mapping relationships, and each group of DRB-HARQ entity mapping relationships may be one-to-one, one-to-multiple or multiple-to-one. As an exemplary implementation, the DRB-HARQ entity mapping information includes at least one of: a group ID indicating the mapping relationship between the DRB and the HARQ entity in each group; a DRB ID of each DRB in each group; one or more HARQ entity IDs correspondingly mapped to each DRB ID in each group; one or more HARQ process IDs correspondingly mapped to each DRB ID in each group; one or more TB IDs correspondingly mapped to each DRB ID in each group; a DRB priority corresponding to each DRB ID in each group; a data mapping rule configured to indicate allocation of data of each DRB to each HARQ entity in each group.

In step 3: In accordance with the configured DRB-HARQ entity mapping relationships, the base station forwards data to be sent via corresponding DRBs to the mapped HARQ entities for transmission. As an exemplary implementation, in step 3, when transmitting data, the base station may transmit data of different services on different TBs according to the configured mapping relationships. For example, for the mapping of one DRB to one HARQ entity, data flows carried by different DRBs are mapped to TBs of different HARQ entities, so that multiplexing of data from different DRBs onto a single TB can be avoided. For another example, for the mapping of a plurality of DRBs to one HARQ entity, data flows carried by different DRBs are mapped to different HARQ processes of the same HARQ entity, which also avoids multiplexing of data from different DRBs onto a single TB. As an exemplary implementation, one HARQ process may transmit two TBs under spatial multiplexing. When configuring the mapping relationships, information of HARQ process IDs and TB IDs may be added to the mapping relationship information to explicitly indicate that data flows carried by different DRBs are mapped to different TBs of the same HARQ entity. For the mapping of one DRB to a plurality of HARQ entities, data flows carried by one DRB may be mapped to TBs of different HARQ entities. Since data of different services can be distinguished at the physical layer, the base station may adopt different physical-layer transmission schemes for data of different services during transmission. For instance, the MCS level may be lowered for TB transmission of high-reliability data flows, and transmit power may be increased in timeslots for transmitting high-reliability data flows.

In step 4: The base station updates the DRB-HARQ entity mapping relationships in response to changes in service requirements, and sends updates of the mapping relationships to the UE via DCI. For example, modified DRB-HARQ entity mapping information is delivered through DCI, enabling the UE to adapt to dynamic changes of service requirements in real time.

It can be seen from this embodiment that data flows with differentiated service characteristic requirements can be classified and mapped to different DRBs, and DRBs are further mapped to HARQ entities through flexible mapping modes, so as to establish associations between services and HARQ entities and distinguish different data flows on TBs. This embodiment realizes differentiated transmission of service data, and achieves clear differentiation and customized guarantee for service differentiation especially in physical link transmission.

Exemplary Embodiment 2: Data mapping procedure on UE Side for downlink transmission When the base station sends data to the UE, the base station configures DRB-HARQ entity mapping relationships and informs the UE of relevant DRB-HARQ entity mapping information via an RRC message (such as an RRC Connection Setup message or an RRC Reconfiguration message). After receiving the DRB-HARQ entity mapping information, the UE can identify which DRB corresponds to TB data received by each HARQ entity. The UE delivers downlink data received by each HARQ entity to the upper layer via the DRB mapped to the corresponding HARQ entity.

The detailed steps performed by the UE serving as a receiving end during downlink transmission are described as follows.

In step 1 (this step is optional and may be skipped to directly execute subsequent steps in practical applications): The UE sends a request message containing a request for DRB-HARQ entity mapping information. The request message sent by the UE may be an RRC Setup Request message, an RRC Configuration Request message or UCI.

In step 2: The UE receives a message containing DRB-HARQ entity mapping information.

By receiving the message containing the DRB-HARQ entity mapping information, the UE can determine which DRB corresponds to each TB under each HARQ process of each HARQ entity, and accordingly deliver downlink data to the upper layer via the mapped DRB. As an exemplary implementation, the DRB-HARQ entity mapping information may indicate a plurality of groups of mapping relationships, and each group of DRB-HARQ entity mapping relationships may be one-to-one, one-to-multiple or multiple-to-one. As an exemplary implementation, the DRB-HARQ entity mapping information includes at least one of: a group ID indicating the mapping relationship between the DRB and the HARQ entity in each group; a DRB ID of each DRB in each group; one or more HARQ entity IDs correspondingly mapped to each DRB ID in each group; one or more HARQ process IDs correspondingly mapped to each DRB ID in each group; one or more TB IDs correspondingly mapped to each DRB ID in each group; a DRB priority corresponding to each DRB ID in each group; a data mapping rule configured to indicate allocation of data of each DRB to each HARQ entity in each group. As an exemplary implementation, the base station sends the DRB-HARQ entity mapping information to the UE via an RRC Setup message or an RRC Reconfiguration message, and the UE acquires the DRB-HARQ entity mapping information by receiving the RRC message. As an exemplary implementation, the base station sends the DRB-HARQ entity mapping information to the UE via DCI, and the UE acquires the DRB-HARQ entity mapping information by receiving such DCI message.

In step 3: In accordance with the DRB-HARQ entity mapping information indicating mapping associations between DRBs and HARQ entities, the UE delivers TB data received by each HARQ entity to the upper layer via the corresponding mapped DRB.

The DRB-HARQ entity mapping information may contain mapping information of multiple groups of HARQ entities and DRBs.

It can be seen that by receiving the DRB-HARQ entity mapping information, the UE can learn how to independently deliver received data to the upper layer.

### Exemplary Embodiment 3: Data mapping procedure on UE Side for uplink transmission

When the UE sends data to the base station, the UE configures DRB-HARQ entity mapping information and sends data according to the DRB-HARQ entity mapping information. Before the UE sends data, the base station informs the UE of the DRB-HARQ entity mapping information via an RRC message (such as an RRC Connection Setup message or an RRC Reconfiguration message), so as to guide the UE to send data according to the DRB-HARQ entity mapping information. As an exemplary implementation, the UE first sends a request for DRB-HARQ entity mapping information, and then the base station sends the DRB-HARQ entity mapping information to the UE.

The detailed steps performed by the UE serving as a transmitting end during uplink transmission are described as follows.

In step 1: The UE sends an RRC request message for DRB-HARQ entity mapping information. For example, the UE requests to configure HARQ entities for DRBs corresponding to four uplink data flows. (This step is optional and may be skipped to directly execute step 2 in practical implementation.)

In step 2: The UE receives an RRC configuration message sent by the base station and containing DRB-HARQ entity mapping information. The RRC configuration message may be an RRC Reconfiguration message or an RRC Request Response message. The DRB-HARQ entity mapping information may indicate a plurality of groups of mapping relationships, and each group of DRB-HARQ entity mapping relationships may be one-to-one, one-to-multiple or multiple-to-one. The DRB-HARQ entity mapping information includes at least one of: a group ID indicating the mapping relationship between the DRB and the HARQ entity in each group; a DRB ID of each DRB in each group; one or more HARQ entity IDs correspondingly mapped to each DRB ID in each group; one or more HARQ process IDs correspondingly mapped to each DRB ID in each group; one or more TB IDs correspondingly mapped to each DRB ID in each group; DRB priority corresponding to each DRB ID in each group; a data mapping rule configured to indicate allocation of data of each DRB to each HARQ entity in each group. As an exemplary implementation, step 2 may also be that the UE receives DRB-HARQ entity mapping information for downlink data sent by the base station, and adopts the DRB-HARQ entity mapping information for downlink data as the DRB-HARQ entity mapping information used for sending uplink data by the UE.

In step 3: The UE maps data flows with different service characteristic information to different DRBs.

In step 4: In accordance with the configured DRB-HARQ entity mapping relationships, the UE forwards data to be sent via corresponding DRBs to the mapped HARQ entities for transmission.

In step 5: The UE sends suggested information for modifying the DRB-HARQ entity mapping relationships to the base station via UCI according to uplink service requirements. (This step is optional.)

Since data of different services can be distinguished at the physical layer of the transmitting end, different physical-layer transmission schemes can be adopted for data of different services. For instance, the MCS level may be lowered for TB transmission of high-reliability data flows, and transmit power may be increased in timeslots for transmitting high-reliability data flows.

It can be seen from this embodiment that data flows with differentiated service characteristic requirements can be classified and mapped to different DRBs, and DRBs are further mapped to HARQ entities through flexible mapping modes, so as to establish associations between services and HARQ entities and distinguish different data flows on TBs. This embodiment realizes differentiated transmission of service data, and achieves clear differentiation and customized guarantee for service differentiation especially in physical link transmission.

### Exemplary Embodiment 4: Data mapping procedure on base station side for uplink transmission

When the base station receives data sent from the UE, the base station configures DRB-HARQ entity mapping information and receives data according to the DRB-HARQ entity mapping information. Before the base station receives data, the base station informs the UE of the DRB-HARQ entity mapping information via an RRC message (such as an RRC Connection Setup message or an RRC Reconfiguration message), so as to guide the UE to send data according to the DRB-HARQ entity mapping information. As an exemplary implementation, the UE first sends a request for DRB-HARQ entity mapping information, and then the base station sends the DRB-HARQ entity mapping information to the UE.

The detailed steps performed by the base station serving as a receiving end during uplink transmission are described as follows.

In step 1: The base station receives an RRC request message for DRB-HARQ entity mapping information sent by the UE. For example, the UE requests to configure HARQ entities for DRBs corresponding to four uplink data flows.

In step 2: The base station sends an RRC configuration message containing DRB-HARQ entity mapping information to the UE. The RRC configuration message may be an RRC Reconfiguration message or an RRC Request Response message. For example, the RRC Reconfiguration message sent by the base station and containing DRB-HARQ entity mapping information indicates one or a plurality of groups of DRB-HARQ entity mapping relationships.

In step 3: The base station configures DRB-HARQ entity mapping relationships for the base station serving as a receiving end according to the RRC message sent by the base station and containing the DRB-HARQ entity mapping information.

In step 4: In accordance with the configured DRB-HARQ entity mapping relationships, the base station delivers TB data received by each HARQ entity to the upper layer via the corresponding mapped DRB.

In step 5: The base station receives suggested information for modifying the DRB-HARQ entity mapping relationships from the UE, and sends the latest DRB-HARQ entity mapping information to the UE via DCI. (This step is optional.)

Since data of different services can be distinguished at the physical layer of the receiving end, received data can be independently delivered to the upper layer by service category. This embodiment realizes differentiated transmission of service data, and achieves clear differentiation and customized guarantee for service differentiation especially in physical link transmission.

Based on the foregoing description of the implementations, those having ordinary skill in the art can clearly understand that the methods according to the above embodiments may be implemented by means of software plus a necessary general-purpose hardware platform, and may of course also be implemented by hardware, but in most cases the former is a preferred implementation. Based on such an understanding, the technical solution of the present disclosure, or the part contributing to the related art in essence, may be embodied in the form of a computer software product. The computer software product is stored in a storage medium (such as Read-Only Memory (ROM)/Random Access Memory (RAM), magnetic disk, optical disc), and includes a plurality of instructions for causing a terminal device (which may be a mobile phone, a computer, a server, a network device, or the like) to execute the methods described in each embodiment of the present disclosure.

An embodiment of the present disclosure further provides a data transmission apparatus, which is configured to implement the foregoing embodiments and exemplary implementations, and descriptions of parts already elaborated will not be repeated herein. As used hereinafter, the term "module" may refer to a combination of software and/or hardware capable of realizing predetermined functions. Although the apparatus described in the following embodiments is preferably implemented by software, implementation by hardware or a combination of software and hardware is also contemplated and feasible.

FIG. 20 is a first structural block diagram of a data transmission apparatus according to some embodiments of the present disclosure. As shown in FIG. 20, the apparatus is applied to a first network element and includes:
a first configuration module 202, configured to configure mapping between Data Radio Bearer (DRB) and Hybrid Automatic Repeat reQuest (HARQ) entity within each group of at least one group based on DRB-HARQ entity mapping information, wherein the DRB-HARQ entity mapping information indicates mapping relationship between DRB and HARQ entity within each group, and each group includes at least one DRB and at least one HARQ entity;
a first sending module 204, configured to deliver, according to the mapping relationship indicated by the DRB-HARQ entity mapping information, data received by an HARQ entity included in each group to an upper layer via a DRB mapped to the HARQ entity in the corresponding group.

In an exemplary embodiment, the mapping relationship between the DRB and the HARQ entity within each group includes at least one of: a mapping relationship between one DRB and one HARQ entity; a mapping relationship between one DRB and a plurality of HARQ entities; a mapping relationship between a plurality of DRBs and one HARQ entity.

In an exemplary embodiment, the DRB-HARQ entity mapping information includes at least one of: a group identifier (ID) configured to indicate the mapping relationship between the DRB and the HARQ entity within each group; a DRB ID of the DRB within each group; one or more HARQ entity IDs correspondingly mapped to the DRB ID within each group; one or more HARQ process IDs correspondingly mapped to the DRB ID within each group; one or more Transport Block (TB) IDs correspondingly mapped to the DRB ID within each group; a DRB priority corresponding to the DRB ID within each group; a data mapping rule configured to indicate allocation of data of each DRB to each HARQ entity within each group.

In an exemplary embodiment, the mapping relationship between the plurality of DRBs and one HARQ entity includes at least one of: different DRBs among the plurality of DRBs are mapped to different HARQ processes of one HARQ entity, wherein the different DRBs among the plurality of DRBs are distinguished by respective HARQ process IDs in the HARQ entity; different DRBs among the plurality of DRBs are mapped to different Transport Blocks (TBs) of one HARQ entity, wherein the different DRBs among the plurality of DRBs are distinguished by respective TB IDs in the HARQ entity; different DRBs among the plurality of DRBs are mapped to different TBs of one HARQ entity, wherein the different DRBs among the plurality of DRBs are distinguished by respective HARQ process IDs and respective TB IDs in the HARQ entity.

In an exemplary embodiment, the mapping relationship between one DRB and the plurality of HARQ entities includes: allocating data on the one DRB to the plurality of HARQ entities according to a data mapping rule, wherein the data mapping rule is configured to indicate allocation of data of each DRB to each HARQ entity within each group.

In an exemplary embodiment, the first configuration module 202 includes at least one of the following units:
a first receiving unit, configured to directly receive a target control signaling message containing the DRB-HARQ entity mapping information, and configure mapping between DRB and HARQ entity by using the target control signaling message;
a first sending unit, configured to send a first control signaling message containing a request for the DRB-HARQ entity mapping information, receive a target control signaling message containing the DRB-HARQ entity mapping information, and configure the mapping between the DRB and the HARQ entity by using the target control signaling message;
a first modification unit, configured to modify the mapping between the DRB and the HARQ entity by using a target control signaling message most recently received, wherein the target control signaling message contains latest DRB-HARQ entity mapping information;
a first update unit, configured to update the mapping between the DRB and the HARQ entity by using a target control signaling message most recently received, wherein the target control signaling message contains latest DRB-HARQ entity mapping information;
a first release unit, configured to release the mapping between the DRB and the HARQ entity originally configured by the first network element, by using a target control signaling message most recently received, wherein the target control signaling message contains latest DRB-HARQ entity mapping information;
a second sending unit, configured to send the DRB-HARQ entity mapping information to a second network element via a second control signaling message containing the DRB-HARQ entity mapping information, so that the second network element sends data according to the DRB-HARQ entity mapping information, wherein the second control signaling message includes at least one of: a Radio Resource Control (RRC) message, Downlink Control Information (DCI).

In an exemplary embodiment, the first receiving unit includes at least one of the following sub-units:
a first receiving sub-unit, configured to receive the target control signaling message from a second network element, wherein the second network element is a network element that directly sends data to the first network element, and the data is processed by the first network element according to the DRB-HARQ entity mapping information after the first network element receives the data;
a second receiving sub-unit, configured to receive the target control signaling message from a third network element, wherein the third network element is a network element that does not directly send data to the first network element, and the data is processed by the first network element according to the DRB-HARQ entity mapping information after the first network element receives the data;
a third receiving sub-unit, configured to receive the target control signaling message from the third network element via the second network element, wherein the third network element is a network element that does not directly send data to the first network element, the second network element is a network element that directly sends data to the first network element, and the data is processed by the first network element according to the DRB-HARQ entity mapping information after the first network element receives the data.

In an exemplary embodiment, the target control signaling message includes at least one of: a Radio Resource Control (RRC) message, a Non-Access Stratum (NAS) message, Downlink Control Information (DCI), Uplink Control Information (UCI).

In an exemplary embodiment, the first control signaling message includes at least one of: a Radio Resource Control (RRC) message, a Non-Access Stratum (NAS) message, Downlink Control Information (DCI), Uplink Control Information (UCI).

In an exemplary embodiment, the RRC message includes at least one of: an RRC Connection Setup message, an RRC Configuration message, an RRC Reconfiguration message, an RRC Transfer message, an RRC Request message, an RRC Request Response message.

In an exemplary embodiment, the first network element includes at least one of: a Radio Access Network (RAN), a User Equipment (UE), a Central Unit (CU), a Distributed Unit (DU), a relay node, an Integrated Access and Backhaul (IAB) node.

In an exemplary embodiment, the second network element includes at least one of: a Radio Access Network (RAN), a User Equipment (UE), a Central Unit (CU), a Distributed Unit (DU), a relay node, an Integrated Access and Backhaul (IAB) node.

In an exemplary embodiment, the third network element includes at least one of: a Radio Access Network (RAN), a User Equipment (UE), a Central Unit (CU), a Distributed Unit (DU), a relay node, an Integrated Access and Backhaul (IAB) node.

FIG. 21 is a second structural block diagram of a data transmission apparatus according to some embodiments of the present disclosure. As shown in FIG. 21, the apparatus is applied to a second network element and includes:
a second configuration module 212, configured to configure mapping between Data Radio Bearer (DRB) and Hybrid Automatic Repeat reQuest (HARQ) entity within each group of at least one group based on DRB-HARQ entity mapping information, wherein the DRB-HARQ entity mapping information indicates mapping relationship between DRB and HARQ entity within each group, and each group includes at least one DRB and at least one HARQ entity; and
a second sending module 214, configured to deliver, according to the mapping relationship indicated by the DRB-HARQ entity mapping information, a data flow to be sent via a DRB in one of the at least one group to a HARQ entity mapped to the DRB in the corresponding group, so as to send the data flow via the HARQ entity.

In an exemplary embodiment, the mapping relationship between the DRB and the HARQ entity within each group includes at least one of: a mapping relationship between one DRB and one HARQ entity; a mapping relationship between one DRB and a plurality of HARQ entities; a mapping relationship between a plurality of DRBs and one HARQ entity.

In an exemplary embodiment, the DRB-HARQ entity mapping information includes at least one of: a group identifier (ID) configured to indicate the mapping relationship between the DRB and the HARQ entity within each group; a DRB ID of the DRB within each group; one or more HARQ entity IDs correspondingly mapped to the DRB ID within each group; one or more HARQ process IDs correspondingly mapped to the DRB ID within each group; one or more Transport Block (TB) IDs correspondingly mapped to the DRB ID within each group; a DRB priority corresponding to the DRB ID within each group; a data mapping rule configured to indicate allocation of data of each DRB to each HARQ entity within each group.

In an exemplary embodiment, the mapping relationship between the plurality of DRBs and one HARQ entity includes at least one of: different DRBs among the plurality of DRBs are mapped to different HARQ processes of one HARQ entity, wherein the different DRBs among the plurality of DRBs are distinguished by respective HARQ process IDs in the HARQ entity; different DRBs among the plurality of DRBs are mapped to different Transport Blocks (TBs) of one HARQ entity, wherein the different DRBs among the plurality of DRBs are distinguished by respective TB IDs in the HARQ entity; different DRBs among the plurality of DRBs are mapped to different TBs of one HARQ entity, wherein the different DRBs among the plurality of DRBs are distinguished by respective HARQ process IDs and respective TB IDs in the HARQ entity.

In an exemplary embodiment, the mapping relationship between one DRB and the plurality of HARQ entities includes: allocating data on the one DRB to the plurality of HARQ entities according to a data mapping rule, wherein the data mapping rule is configured to indicate allocation of data of each DRB to each HARQ entity within each group.

In an exemplary embodiment, the second configuration module 212 includes the following units:
a second receiving unit, configured to receive a third control signaling message containing the DRB-HARQ entity mapping information, and configure the mapping between the DRB and the HARQ entity by using the third control signaling message;
a third sending unit, configured to send a fourth control signaling message containing a request for the DRB-HARQ entity mapping information, receive a third control signaling message containing the DRB-HARQ entity mapping information, and configure the mapping between the DRB and the HARQ entity by using the third control signaling message;
a second modification unit, configured to modify the mapping between the DRB and the HARQ entity by using a third control signaling message most recently received, wherein the third control signaling message contains latest DRB-HARQ entity mapping information;
a second update unit, configured to update the mapping between the DRB and the HARQ entity by using a third control signaling message most recently received, wherein the third control signaling message contains latest DRB-HARQ entity mapping information;
a second release unit, configured for the second network element to release the mapping between the DRB and the HARQ entity originally configured by the second network element, by using a third control signaling message most recently received, wherein the third control signaling message contains latest DRB-HARQ entity mapping information.

In an exemplary embodiment, the second receiving unit includes at least one of the following sub-units:
a fourth receiving sub-unit, configured to receive the third control signaling message containing the DRB-HARQ entity mapping information from a first network element, wherein the first network element is a network element that directly receives data from the second network element, and the data is sent by the second network element according to the DRB-HARQ entity mapping information;
a fifth receiving sub-unit, configured to receive the third control signaling message containing the DRB-HARQ entity mapping information from a third network element, wherein the third network element is a network element that does not directly receive data from the second network element, and the data is sent by the second network element according to the DRB-HARQ entity mapping information;
a sixth receiving sub-unit, configured to receive the third control signaling message containing the DRB-HARQ entity mapping information from the third network element via the first network element, wherein the first network element is a network element that directly receives data from the second network element, the third network element is a network element that does not directly receive data from the second network element, and the data is sent by the second network element according to the DRB-HARQ entity mapping information.

In an exemplary embodiment, the apparatus further includes a fourth sending module, configured to send a fifth control signaling message containing the DRB-HARQ entity mapping information to the first network element, so that the first network element receives data from the second network element according to the DRB-HARQ entity mapping information, wherein the fifth control signaling message includes at least one of: a Radio Resource Control (RRC) message, Downlink Control Information (DCI).

In an exemplary embodiment, the apparatus further includes a receiving module, configured to, before the fourth sending module sends the fifth control signaling message containing the DRB-HARQ entity mapping information to the first network element, receive a sixth control signaling message containing a request for the DRB-HARQ entity mapping information, wherein the sixth control signaling message includes at least one of: a Radio Resource Control (RRC) message, Uplink Control Information (UCI).

In an exemplary embodiment, the third control signaling message includes at least one of: a Radio Resource Control (RRC) message, a Non-Access Stratum (NAS) message, Downlink Control Information (DCI), Uplink Control Information (UCI).

In an exemplary embodiment, the fourth control signaling message includes at least one of: a Radio Resource Control (RRC) message, a Non-Access Stratum (NAS) message, Downlink Control Information (DCI), Uplink Control Information (UCI).

In an exemplary embodiment, the RRC message includes at least one of: an RRC Connection Setup message, an RRC Configuration message, an RRC Reconfiguration message, an RRC Transfer message, an RRC Request message, an RRC Request Response message.

In an exemplary embodiment, the second sending module 214 includes a third sending unit, configured to send the data flow according to service characteristics of the data flow to be sent, wherein data flows with different service characteristics are delivered via different DRBs to respective HARQ entities mapped to the different DRBs.

In an exemplary embodiment, the second network element includes at least one of: a Radio Access Network (RAN), a User Equipment (UE), a Central Unit (CU), a Distributed Unit (DU), a relay node, an Integrated Access and Backhaul (IAB) node.

In an exemplary embodiment, the first network element includes at least one of: a Radio Access Network (RAN), a User Equipment (UE), a Central Unit (CU), a Distributed Unit (DU), a relay node, an Integrated Access and Backhaul (IAB) node.

In an exemplary embodiment, the third network element includes at least one of: a Radio Access Network (RAN), a User Equipment (UE), a Central Unit (CU), a Distributed Unit (DU), a relay node, an Integrated Access and Backhaul (IAB) node.

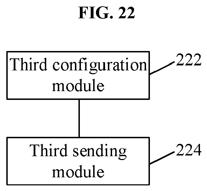

FIG. 22 is a third structural block diagram of a data transmission apparatus according to some embodiments of the present disclosure. As shown in FIG. 22, the apparatus is applied to a third network element and includes:
a third configuration module 222, configured to configure mapping between Data Radio Bearer (DRB) and Hybrid Automatic Repeat reQuest (HARQ) entity within each group of at least one group based on DRB-HARQ entity mapping information, wherein the DRB-HARQ entity mapping information indicates mapping relationship between DRB and HARQ entity within each group, and each group includes at least one DRB and at least one HARQ entity; and
a third sending module 224, configured to send the DRB-HARQ entity mapping information.

In an exemplary embodiment, the mapping relationship between the DRB and the HARQ entity within each group includes at least one of: a mapping relationship between one DRB and one HARQ entity; a mapping relationship between one DRB and a plurality of HARQ entities; a mapping relationship between a plurality of DRBs and one HARQ entity.

In an exemplary embodiment, the DRB-HARQ entity mapping information includes at least one of: a group identifier (ID) configured to indicate the mapping relationship between the DRB and the HARQ entity within each group; a DRB ID of the DRB within each group; one or more HARQ entity IDs correspondingly mapped to the DRB ID within each group; one or more HARQ process IDs correspondingly mapped to the DRB ID within each group; one or more Transport Block (TB) IDs correspondingly mapped to the DRB ID within each group; a DRB priority corresponding to the DRB ID within each group; a data mapping rule configured to indicate allocation of data of each DRB to each HARQ entity within each group.

In an exemplary embodiment, the mapping relationship between the plurality of DRBs and one HARQ entity includes at least one of: different DRBs among the plurality of DRBs are mapped to different HARQ processes of one HARQ entity, wherein the different DRBs among the plurality of DRBs are distinguished by respective HARQ process IDs in the HARQ entity; different DRBs among the plurality of DRBs are mapped to different Transport Blocks (TBs) of one HARQ entity, wherein the different DRBs among the plurality of DRBs are distinguished by respective TB IDs in the HARQ entity; different DRBs among the plurality of DRBs are mapped to different TBs of one HARQ entity, wherein the different DRBs among the plurality of DRBs are distinguished by respective HARQ process IDs and respective TB IDs in the HARQ entity.

In an exemplary embodiment, the mapping relationship between one DRB and the plurality of HARQ entities includes: allocating data on the one DRB to the plurality of HARQ entities according to a data mapping rule, wherein the data mapping rule is configured to indicate allocation of data of each DRB to each HARQ entity within each group.

In an exemplary embodiment, the third sending module 224 includes at least one of the following sending units:
a fourth sending unit, configured to directly send the DRB-HARQ entity mapping information to a first network element, so that when receiving data, the first network element configures the mapping between the DRB and the HARQ entity within each group, and delivers, according to the mapping between the DRB and the HARQ entity within each group, data received by an HARQ entity included in each group to an upper layer via a DRB mapped to the HARQ entity in the corresponding group;
a fifth sending unit, configured to directly send the DRB-HARQ entity mapping information to a second network element, so that when sending data, the second network element configures the mapping between the DRB and the HARQ entity within each group, and delivers, according to the mapping between the DRB and the HARQ entity within each group, a data flow to be sent via a DRB in one of the at least one group to a HARQ entity mapped to the DRB in the corresponding group, so as to send the data flow via the HARQ entity;
a sixth sending unit, configured to send the DRB-HARQ entity mapping information to the first network element via the second network element, so that the first network element processes data mapping according to the DRB-HARQ entity mapping information during data transmission.

In an exemplary embodiment, the third sending module 224 includes a seventh sending unit, configured to send the DRB-HARQ entity mapping information via a seventh control signaling message, wherein the seventh control signaling message includes at least one of: a Radio Resource Control (RRC) message, a Non-Access Stratum (NAS) message, Downlink Control Information (DCI), Uplink Control Information (UCI).

In an exemplary embodiment, the RRC message includes at least one of: an RRC Connection Setup message, an RRC Configuration message, an RRC Reconfiguration message, an RRC Transfer message, an RRC Request message, an RRC Request Response message.

In an exemplary embodiment, the third network element includes at least one of: a Radio Access Network (RAN), a User Equipment (UE), a Central Unit (CU), a Distributed Unit (DU), a relay node, an Integrated Access and Backhaul (IAB) node.

In an exemplary embodiment, the first network element includes at least one of: a Radio Access Network (RAN), a User Equipment (UE), a Central Unit (CU), a Distributed Unit (DU), a relay node, an Integrated Access and Backhaul (IAB) node.

In an exemplary embodiment, the second network element includes at least one of: a Radio Access Network (RAN), a User Equipment (UE), a Central Unit (CU), a Distributed Unit (DU), a relay node, an Integrated Access and Backhaul (IAB) node.

It should be noted that each of the above modules may be implemented by software or hardware. For hardware implementation, the following modes are provided without limitation: all the above modules are integrated within a single processor; or each of the above modules is disposed in different processors in any combination.

The embodiments of the present disclosure further provide a computer-readable storage medium storing a computer program, where the computer program, when executed by a processor, implements the steps described in any of the foregoing method embodiments.

In an exemplary embodiment, the computer-readable storage medium may include, but is not limited to, a Universal Serial Bus (USB) flash drive, a Read-Only Memory (ROM), a Random Access Memory (RAM), a portable hard disk, a magnetic disk, an optical disc, or any other medium capable of storing computer programs.

The embodiments of the present disclosure further provide an electronic apparatus, including a memory and a processor. The memory stores a computer program, and the processor is configured to run the computer program to perform the steps described in any of the foregoing method embodiments.

In an exemplary embodiment, the electronic apparatus may further include a transmission device and an input/output device, wherein the transmission device is connected to the processor, and the input/output device is connected to the processor.

For specific examples of the present embodiment, reference may be made to the examples described in the foregoing embodiments and exemplary implementations, which will not be repeated herein.

Apparently, those having ordinary skill in the art shall appreciate that each module or each step of the present disclosure described above may be implemented by a general-purpose computing device, which may be centralized on a single computing device or distributed across a network composed of multiple computing devices. They may be implemented by program codes executable by a computing device, so that the codes may be stored in a storage apparatus for execution by the computing device. In some cases, the illustrated or described steps may be executed in an order different from that set forth herein. Alternatively, individual modules may be fabricated as separate integrated circuit chips, or multiple modules or steps may be fabricated into a single integrated circuit chip. Therefore, the present disclosure is not limited to any specific combination of hardware and software.

The foregoing descriptions are merely exemplary embodiments of the present disclosure and are not intended to limit the present disclosure. Various modifications and variations may be made by those having ordinary skill in the art without departing from the scope of the present disclosure. Any modification, equivalent replacement, improvement, or the like made within the principle of the present disclosure shall fall within the protection scope of the present disclosure.

## Claims

1. A data transmission method, comprising:
configuring, by a first network element, mapping between Data Radio Bearer, DRB, and Hybrid Automatic Repeat reQuest, HARQ, entity within each group of at least one group based on DRB-HARQ entity mapping information, wherein the DRB-HARQ entity mapping information indicates mapping relationship between DRB and HARQ entity within each group, and each group comprises at least one DRB and at least one HARQ entity; and
delivering, by the first network element according to the mapping relationship indicated by the DRB-HARQ entity mapping information, data received by an HARQ entity comprised in each group to an upper layer via a DRB mapped to the HARQ entity in the corresponding group.

2. The method according to claim 1, wherein the mapping relationship between the DRB and the HARQ entity within each group comprises at least one of:
a mapping relationship between one DRB and one HARQ entity;
a mapping relationship between one DRB and a plurality of HARQ entities;
a mapping relationship between a plurality of DRBs and one HARQ entity.

3. The method according to claim 1 or 2, wherein the DRB-HARQ entity mapping information comprises at least one of:
a group identifier, ID, configured to indicate the mapping relationship between the DRB and the HARQ entity within each group;
a DRB ID of the DRB within each group;
one or more HARQ entity IDs correspondingly mapped to the DRB ID within each group;
one or more HARQ process IDs correspondingly mapped to the DRB ID within each group;
one or more Transport Block, TB, IDs correspondingly mapped to the DRB ID within each group;
a DRB priority corresponding to the DRB ID within each group;
a data mapping rule configured to indicate allocation of data of each DRB to each HARQ entity within each group.

4. The method according to claim 2, wherein the mapping relationship between the plurality of DRBs and one HARQ entity comprises at least one of:
different DRBs among the plurality of DRBs are mapped to different HARQ processes of one HARQ entity, wherein the different DRBs among the plurality of DRBs are distinguished by respective HARQ process IDs in the HARQ entity;
different DRBs among the plurality of DRBs are mapped to different Transport Blocks, TBs, of one HARQ entity, wherein the different DRBs among the plurality of DRBs are distinguished by respective TB IDs in the HARQ entity;
different DRBs among the plurality of DRBs are mapped to different TBs of one HARQ entity, wherein the different DRBs among the plurality of DRBs are distinguished by respective HARQ process IDs and respective TB IDs in the HARQ entity.

5. The method according to claim 2, wherein the mapping relationship between one DRB and the plurality of HARQ entities comprises:
allocating data on the one DRB to the plurality of HARQ entities according to a data mapping rule, wherein the data mapping rule is configured to indicate allocation of data of each DRB to each HARQ entity within each group.

6. The method according to any one of claims 1 to 5, wherein configuring, by the first network element, the mapping between the DRB and the HARQ entity within each group based on the DRB-HARQ entity mapping information comprises at least one of:
directly receiving, by the first network element, a target control signaling message containing the DRB-HARQ entity mapping information, and configuring, by the first network element, the mapping between the DRB and the HARQ entity by using the target control signaling message;
sending, by the first network element, a first control signaling message containing a request for the DRB-HARQ entity mapping information, receiving, by the first network element, a target control signaling message containing the DRB-HARQ entity mapping information, and configuring, by the first network element, the mapping between the DRB and the HARQ entity by using the target control signaling message;
modifying, by the first network element, the mapping between the DRB and the HARQ entity by using a target control signaling message most recently received, wherein the target control signaling message contains latest DRB-HARQ entity mapping information;
updating, by the first network element, the mapping between the DRB and the HARQ entity by using a target control signaling message most recently received, wherein the target control signaling message contains latest DRB-HARQ entity mapping information;
releasing, by the first network element, the mapping between the DRB and the HARQ entity originally configured by the first network element, by using a target control signaling message most recently received, wherein the target control signaling message contains latest DRB-HARQ entity mapping information;
sending, by the first network element, the DRB-HARQ entity mapping information to a second network element via a second control signaling message containing the DRB-HARQ entity mapping information, so that the second network element sends data according to the DRB-HARQ entity mapping information, wherein the second control signaling message comprises at least one of: a Radio Resource Control, RRC, message, Downlink Control Information, DCI.

7. The method according to claim 6, wherein directly receiving, by the first network element, the target control signaling message containing the DRB-HARQ entity mapping information comprises at least one of:
receiving, by the first network element, the target control signaling message from a second network element, wherein the second network element is a network element that directly sends data to the first network element, and the data is processed by the first network element according to the DRB-HARQ entity mapping information after the first network element receives the data;
receiving, by the first network element, the target control signaling message from a third network element, wherein the third network element is a network element that does not directly send data to the first network element, and the data is processed by the first network element according to the DRB-HARQ entity mapping information after the first network element receives the data;
receiving, by the first network element, the target control signaling message from the third network element via the second network element, wherein the third network element is a network element that does not directly send data to the first network element, the second network element is a network element that directly sends data to the first network element, and the data is processed by the first network element according to the DRB-HARQ entity mapping information after the first network element receives the data.

8. The method according to claim 6 or 7, wherein the target control signaling message comprises at least one of:
a Radio Resource Control, RRC, message, a Non-Access Stratum, NAS, message, Downlink Control Information, DCI, Uplink Control Information, UCI.

9. The method according to claim 6, wherein the first control signaling message comprises at least one of:
a Radio Resource Control, RRC, message, a Non-Access Stratum, NAS, message, Downlink Control Information, DCI, Uplink Control Information, UCI.

10. The method according to claim 8 or 9, wherein the RRC message comprises at least one of:
an RRC Connection Setup message, an RRC Configuration message, an RRC Reconfiguration message, an RRC Transfer message, an RRC Request message, an RRC Request Response message.

11. The method according to any one of claims 1 to 10, wherein the first network element comprises at least one of:
a Radio Access Network, RAN, a User Equipment, UE, a Central Unit, CU, a Distributed Unit, DU, a relay node, an Integrated Access and Backhaul, IAB, node.

12. The method according to claim 7, wherein the second network element comprises at least one of:
a Radio Access Network, RAN, a User Equipment, UE, a Central Unit, CU, a Distributed Unit, DU, a relay node, an Integrated Access and Backhaul, IAB, node.

13. The method according to claim 7, wherein the third network element comprises at least one of:
a Radio Access Network, RAN, a User Equipment, UE, a Central Unit, CU, a Distributed Unit, DU, a relay node, an Integrated Access and Backhaul, IAB, node.

14. A data transmission method, comprising:
configuring, by a second network element, mapping between Data Radio Bearer, DRB, and Hybrid Automatic Repeat reQuest, HARQ, entity within each group of at least one group based on DRB-HARQ entity mapping information, wherein the DRB-HARQ entity mapping information indicates mapping relationship between DRB and HARQ entity within each group, and each group comprises at least one DRB and at least one HARQ entity; and
delivering, by the second network element according to the mapping relationship indicated by the DRB-HARQ entity mapping information, a data flow to be sent via a DRB in one of the at least one group to a HARQ entity mapped to the DRB in the corresponding group, so as to send the data flow via the HARQ entity.

15. The method according to claim 14, wherein the mapping relationship between the DRB and the HARQ entity within each group comprises at least one of:
a mapping relationship between one DRB and one HARQ entity;
a mapping relationship between one DRB and a plurality of HARQ entities;
a mapping relationship between a plurality of DRBs and one HARQ entity.

16. The method according to claim 14 or 15, wherein the DRB-HARQ entity mapping information comprises at least one of:
a group identifier, ID, configured to indicate the mapping relationship between the DRB and the HARQ entity within each group;
a DRB ID of the DRB within each group;
one or more HARQ entity IDs correspondingly mapped to the DRB ID within each group;
one or more HARQ process IDs correspondingly mapped to the DRB ID within each group;
one or more Transport Block, TB, IDs correspondingly mapped to the DRB ID within each group;
a DRB priority corresponding to the DRB ID within each group;
a data mapping rule configured to indicate allocation of data of each DRB to each HARQ entity within each group.

17. The method according to claim 15, wherein the mapping relationship between the plurality of DRBs and one HARQ entity comprises at least one of:
different DRBs among the plurality of DRBs are mapped to different HARQ processes of one HARQ entity, wherein the different DRBs among the plurality of DRBs are distinguished by respective HARQ process IDs in the HARQ entity;
different DRBs among the plurality of DRBs are mapped to different Transport Blocks, TBs, of one HARQ entity, wherein the different DRBs among the plurality of DRBs are distinguished by respective TB IDs in the HARQ entity;
different DRBs among the plurality of DRBs are mapped to different TBs of one HARQ entity, wherein the different DRBs among the plurality of DRBs are distinguished by respective HARQ process IDs and respective TB IDs in the HARQ entity.

18. The method according to claim 15, wherein the mapping relationship between one DRB and the plurality of HARQ entities comprises:
allocating data on the one DRB to the plurality of HARQ entities according to a data mapping rule, wherein the data mapping rule is configured to indicate allocation of data of each DRB to each HARQ entity within each group.

19. The method according to any one of claims 14 to 18, wherein configuring, by the second network element, the mapping between the DRB and the HARQ entity within each group based on the DRB-HARQ entity mapping information comprises at least one of:
receiving, by the second network element, a third control signaling message containing the DRB-HARQ entity mapping information, and configuring, by the second network element, the mapping between the DRB and the HARQ entity by using the third control signaling message;
sending, by the second network element, a fourth control signaling message containing a request for the DRB-HARQ entity mapping information, receiving, by the second network element, a third control signaling message containing the DRB-HARQ entity mapping information, and configuring, by the second network element, the mapping between the DRB and the HARQ entity by using the third control signaling message;
modifying, by the second network element, the mapping between the DRB and the HARQ entity by using a third control signaling message most recently received, wherein the third control signaling message contains latest DRB-HARQ entity mapping information;
updating, by the second network element, the mapping between the DRB and the HARQ entity by using a third control signaling message most recently received, wherein the third control signaling message contains latest DRB-HARQ entity mapping information;
releasing, by the second network element, the mapping between the DRB and the HARQ entity originally configured by the second network element, by using a third control signaling message most recently received, wherein the third control signaling message contains latest DRB-HARQ entity mapping information.

20. The method according to claim 19, wherein receiving, by the second network element, the third control signaling message containing the DRB-HARQ entity mapping information comprises at least one of:
receiving, by the second network element, the third control signaling message containing the DRB-HARQ entity mapping information from a first network element, wherein the first network element is a network element that directly receives data from the second network element, and the data is sent by the second network element according to the DRB-HARQ entity mapping information;
receiving, by the second network element, the third control signaling message containing the DRB-HARQ entity mapping information from a third network element, wherein the third network element is a network element that does not directly receive data from the second network element, and the data is sent by the second network element according to the DRB-HARQ entity mapping information;
receiving, by the second network element, the third control signaling message containing the DRB-HARQ entity mapping information from the third network element via the first network element, wherein the first network element is a network element that directly receives data from the second network element, the third network element is a network element that does not directly receive data from the second network element, and the data is sent by the second network element according to the DRB-HARQ entity mapping information.

21. The method according to any one of claims 14 to 20, further comprising:
sending, by the second network element, a fifth control signaling message containing the DRB-HARQ entity mapping information to the first network element, so that the first network element receives data from the second network element according to the DRB-HARQ entity mapping information, wherein the fifth control signaling message comprises at least one of: a Radio Resource Control, RRC, message, Downlink Control Information, DCI.

22. The method according to claim 21, wherein before sending, by the second network element, the fifth control signaling message containing the DRB-HARQ entity mapping information to the first network element, the method further comprises:
receiving, from the first network element by the second network element, a sixth control signaling message containing a request for the DRB-HARQ entity mapping information, wherein the sixth control signaling message comprises at least one of: a Radio Resource Control, RRC, message, Uplink Control Information, UCI.

23. The method according to claim 19 or 20, wherein the third control signaling message comprises at least one of:
a Radio Resource Control, RRC, message, a Non-Access Stratum, NAS, message, Downlink Control Information, DCI, Uplink Control Information, UCI.

24. The method according to claim 19, wherein the fourth control signaling message comprises at least one of:
a Radio Resource Control, RRC, message, a Non-Access Stratum, NAS, message, Downlink Control Information, DCI, Uplink Control Information, UCI.

25. The method according to any one of claims 21 to 24, wherein the RRC message comprises at least one of:
an RRC Connection Setup message, an RRC Configuration message, an RRC Reconfiguration message, an RRC Transfer message, an RRC Request message, an RRC Request Response message.

26. The method according to claim 14, wherein delivering, by the second network element, the data flow to be sent via the DRB in one of the at least one group to the HARQ entity mapped to the DRB in the corresponding group, so as to send the data flow via the HARQ entity comprises:
sending the data flow according to service characteristics of the data flow to be sent, wherein data flows with different service characteristics are delivered via different DRBs to respective HARQ entities mapped to the different DRBs.

27. The method according to any one of claims 14 to 26, wherein the second network element comprises at least one of:
a Radio Access Network, RAN, a User Equipment, UE, a Central Unit, CU, a Distributed Unit, DU, a relay node, an Integrated Access and Backhaul, IAB, node.

28. The method according to any one of claims 20 to 22, wherein the first network element comprises at least one of:
a Radio Access Network, RAN, a User Equipment, UE, a Central Unit, CU, a Distributed Unit, DU, a relay node, an Integrated Access and Backhaul, IAB, node.

29. The method according to claim 20, wherein the third network element comprises at least one of:
a Radio Access Network, RAN, a User Equipment, UE, a Central Unit, CU, a Distributed Unit, DU, a relay node, an Integrated Access and Backhaul, IAB, node.

30. A data transmission method, comprising:
configuring, by a third network element, mapping between Data Radio Bearer, DRB, and Hybrid Automatic Repeat reQuest, HARQ, entity within each group of at least one group based on DRB-HARQ entity mapping information, wherein the DRB-HARQ entity mapping information indicates mapping relationship between DRB and HARQ entity within each group, and each group comprises at least one DRB and at least one HARQ entity; and
sending, by the third network element, the DRB-HARQ entity mapping information.

31. The method according to claim 30, wherein the mapping relationship between the DRB and the HARQ entity within each group comprises at least one of:
a mapping relationship between one DRB and one HARQ entity;
a mapping relationship between one DRB and a plurality of HARQ entities;
a mapping relationship between a plurality of DRBs and one HARQ entity.

32. The method according to claim 30 or 31, wherein the DRB-HARQ entity mapping information comprises at least one of:
a group identifier, ID, configured to indicate the mapping relationship between the DRB and the HARQ entity within each group;
a DRB ID of the DRB within each group;
one or more HARQ entity IDs correspondingly mapped to the DRB ID within each group;
one or more HARQ process IDs correspondingly mapped to the DRB ID within each group;
one or more Transport Block, TB, IDs correspondingly mapped to the DRB ID within each group;
a DRB priority corresponding to the DRB ID within each group;
a data mapping rule configured to indicate allocation of data of each DRB to each HARQ entity within each group.

33. The method according to claim 31, wherein the mapping relationship between the plurality of DRBs and one HARQ entity comprises at least one of:
different DRBs among the plurality of DRBs are mapped to different HARQ processes of one HARQ entity, wherein the different DRBs among the plurality of DRBs are distinguished by respective HARQ process IDs in the HARQ entity;
different DRBs among the plurality of DRBs are mapped to different Transport Blocks, TBs, of one HARQ entity, wherein the different DRBs among the plurality of DRBs are distinguished by respective TB IDs in the HARQ entity;
different DRBs among the plurality of DRBs are mapped to different TBs of one HARQ entity, wherein the different DRBs among the plurality of DRBs are distinguished by respective HARQ process IDs and respective TB IDs in the HARQ entity.

34. The method according to claim 31, wherein the mapping relationship between one DRB and the plurality of HARQ entities comprises:
allocating data on the one DRB to the plurality of HARQ entities according to a data mapping rule, wherein the data mapping rule is configured to indicate allocation of data of each DRB to each HARQ entity within each group.

35. The method according to claim 30, wherein sending, by the third network element, the DRB-HARQ entity mapping information comprises at least one of:
directly sending, by the third network element, the DRB-HARQ entity mapping information to a first network element, so that when receiving data, the first network element configures the mapping between the DRB and the HARQ entity within each group, and delivers, according to the mapping between the DRB and the HARQ entity within each group, data received by an HARQ entity comprised in each group to an upper layer via a DRB mapped to the HARQ entity in the corresponding group;
directly sending, by the third network element, the DRB-HARQ entity mapping information to a second network element, so that when sending data, the second network element configures the mapping between the DRB and the HARQ entity within each group, and delivers, according to the the mapping between the DRB and the HARQ entity within each group, a data flow to be sent via a DRB in one of the at least one group to a HARQ entity mapped to the DRB in the corresponding group, so as to send the data flow via the HARQ entity;
sending, by the third network element, the DRB-HARQ entity mapping information to the first network element via the second network element, so that the first network element processes data mapping according to the DRB-HARQ entity mapping information during data transmission.

36. The method according to any one of claims 30 to 35, wherein sending, by the third network element, the DRB-HARQ entity mapping information comprises:
sending, by the third network element, the DRB-HARQ entity mapping information via a seventh control signaling message, wherein the seventh control signaling message comprises at least one of: a Radio Resource Control, RRC, message, a Non-Access Stratum, NAS, message, Downlink Control Information, DCI, Uplink Control Information, UCI.

37. The method according to claim 36, wherein the RRC message comprises at least one of:
an RRC Connection Setup message, an RRC Configuration message, an RRC Reconfiguration message, an RRC Transfer message, an RRC Request message, an RRC Request Response message.

38. The method according to any one of claims 30 to 37, wherein the third network element comprises at least one of:
a Radio Access Network, RAN, a User Equipment, UE, a Central Unit, CU, a Distributed Unit, DU, a relay node, an Integrated Access and Backhaul, IAB, node.

39. The method according to claim 35, wherein the first network element comprises at least one of:
a Radio Access Network, RAN, a User Equipment, UE, a Central Unit, CU, a Distributed Unit, DU, a relay node, an Integrated Access and Backhaul, IAB, node.

40. The method according to claim 35, wherein the second network element comprises at least one of:
a Radio Access Network, RAN, a User Equipment, UE, a Central Unit, CU, a Distributed Unit, DU, a relay node, an Integrated Access and Backhaul, IAB, node.

41. A computer-readable storage medium, wherein a computer program is stored in the computer-readable storage medium, and the computer program, when executed by a processor, implements the steps of the method according to any one of claims 1 to 13, or the steps of the method according to any one of claims 14 to 29, or the steps of the method according to any one of claims 30 to 40.

42. An electronic apparatus, comprising a memory and a processor, wherein the memory stores a computer program executable by the processor; and the processor, when executing the computer program, implements the steps of the method according to any one of claims 1 to 13, or the steps of the method according to any one of claims 14 to 29, or the steps of the method according to any one of claims 30 to 40.
